# EUROPEAN PATENT SPECIFICATION

(11) **EP 3 592 692 B1**
(45) Date of publication and mention of the grant of the patent: **24.07.2024**
(21) Application number: 17896260.1
(22) Date of filing: 08.02.2017
(51) Int. Cl.: B67C 9/00, B67D 1/12, B67D 7/00, B67D 7/02, B67D 7/04, B67D 7/36, F16L 55/07

(54) **FLUID REMOVAL APPARATUS**
VORRICHTUNG ZUR ENTFERNUNG VON FLÜSSIGKEITEN
APPAREIL D'ÉLIMINATION DE FLUIDE

(43) Date of publication of application: 15.01.2020
(73) Proprietor: Pumping Solutions Limited, Auckland 1052 (NZ)
(72) Inventor: FENTON, Ross Oliver, Hillcrest Auckland (NZ)
(74) Representative: Page White Farrer
(86) International application number: PCT/NZ2017/050010
(87) International publication number: WO 2018/147748

(56) References cited:
- EP-A1- 0 330 034
- EP-A1- 0 330 034
- US-A- 3 045 608
- US-A- 743 006
- US-A1- 2004 025 968
- US-A1- 2016 002 023
- US-A1- 2016 002 023

## Description

### FIELD OF THE INVENTION

This invention relates to a fluid removal apparatus and related method for removing fluid from an enclosure.

### BACKGROUND

Fluid can be removed from enclosures, such as drums, using a vacuum-operated conduit connected to a pump. Problems can arise, however, if a valve or valves associated with the pump are inadvertently reversed, causing the pump to blow fluid into (instead of suck fluid out of) the drum. This can cause excessive pressure to build up in the conduit and the drum. Valuable fluid in the drum may be blown or spill out of the conduit or the drum and be lost. Further, the fluid, which may be a hazardous liquid for example, may be blown out of the drum and over the operator.

US 2016/0002023 discloses a self-measuring container and method for removing content therein. EP 0330034 discloses a boiler with a replenishment manifold. US 2004/0025968 discloses a no-spill vapor-recovery container spout.

In this specification where reference has been made to patent specifications, other external documents, or other sources of information, this is generally for the purpose of providing a context for discussing the features of the invention.

An embodiment of the present invention seeks to provide a fluid removal apparatus that can be used to remove most of the fluid from an enclosure.

Alternatively or additionally, an embodiment of the present invention seeks to provide a fluid removal apparatus that inhibits fluid spilling from the enclosure and the apparatus when the apparatus is placed partially in the enclosure to remove fluid in the enclosure.

Alternatively or additionally, an embodiment of the present invention seeks to at least provide the public with a useful alternative.

### SUMMARY OF THE INVENTION

In accordance with a first aspect of the present invention, there is provided a fluid removal apparatus comprising: a conduit having an inlet and an outlet; a valve at the inlet, the valve having one or more open configurations in which fluid is allowed to flow through the valve and a closed configuration in which fluid flow is substantially inhibited through the valve, the one or more open configurations comprising a first open configuration and a second open configuration; a first valve operating mechanism at or near the valve and configured to open and close the valve by moving the valve between the first open configuration and the closed configuration; and a second valve operating mechanism remotely spaced from the valve and configured to open and close the valve by moving the valve between the second open configuration and the closed configuration.

Not according to the claimed invention, the valve is biased towards the closed configuration.

In one embodiment, the valve comprises a first pressure relief element and at least one first aperture through which fluid is allowed to flow; the first valve operating mechanism comprises or is associated with the first pressure relief element and the first aperture; and when the pressure of a pressurised fluid in the conduit is substantially equal to or greater than a predetermined pressure, the first pressure relief element is configured to move from a home position in which the valve is in the closed configuration to a relief position in which the valve is in the first open configuration to allow the pressurised fluid to flow through the valve via the first aperture.

Not according to the claimed invention, the valve comprises a second pressure relief element that is configured to cooperate with the first pressure relief element to inhibit fluid flow through the first aperture when the first pressure relief element is in the home position; and when the pressure of the pressurised fluid in the conduit is substantially equal to or greater than the predetermined pressure, the first pressure relief element is configured to move relatively away from the second pressure relief element to allow the pressurised fluid to flow through the valve via the first aperture.

Not according to the claimed invention, the second pressure relief element is configured to cooperate with the first pressure relief element to prevent fluid flow through the first aperture when the first pressure relief element is in the home position.

Not according to the claimed invention, the second pressure relief element is fixed relative to the conduit.

Not according to the claimed invention, the second pressure relief element comprises the first aperture.

Not according to the claimed invention, the first valve operating mechanism comprises or is associated with a first spring that biases the first pressure relief element towards the home position.

In one embodiment, the second valve operating mechanism is mechanically coupled to the valve.

In one embodiment, the second valve operating mechanism is mechanically coupled to the valve by a cable, a rod, or both a cable and a rod.

In one embodiment, the apparatus further comprises a lever for operating the second valve operating mechanism.

In one embodiment, the conduit has a first portion extending in a first direction and a second portion extending in a second direction generally transverse to the first direction, and wherein the second valve operating mechanism is operatively attached to the second portion.

Not according to the claimed invention, the second direction is substantially perpendicular to the first direction.

In one embodiment, the second valve operating mechanism is operatively attached to the second portion.

In one embodiment, the apparatus is attachable to an external pump.

In one embodiment, the apparatus is attachable to the external pump via a pump conduit.

Not according to the claimed invention, the valve comprises a body with at least one second aperture through which fluid is allowed to flow, the second aperture being associated with the second valve operating mechanism.

Not according to the claimed invention, the at least one second aperture comprises at least one laterally extending aperture.

Not according to the claimed invention, the valve further comprises a plug for blocking the second aperture; and the second valve operating mechanism is configured to move the plug relative to the body from a blocking position in which the valve is in the closed configuration to an unblocking position in which the valve is in the second open configuration to allow fluid to flow through the valve via the second aperture.

Not according to the claimed invention, the second valve operating mechanism comprises or is associated with a second spring that biases the plug towards the blocking position.

In one embodiment, the conduit comprises three distinct elements that are secured or securable together to form the conduit.

In one embodiment, the fluid removal apparatus is moveable and operable by a user by hand to remove a fluid from an enclosure.

In accordance with a second aspect of the present invention, there is provided a method for removing a fluid from an enclosure, the method comprising:
a) placing the fluid removal apparatus according to the first aspect described above partially in the enclosure such that the inlet is inside the interior of the enclosure and an operating portion of the second valve operating mechanism is outside the interior of the enclosure;
b) opening the valve via one of the first valve operating mechanism and the second valve operating mechanism;
c) drawing fluid from the enclosure through the conduit or releasing fluid from the conduit into the enclosure; and
d) closing the valve via the one of the first valve operating mechanism and the second valve operating mechanism.

Not according to the claimed invention, step d) at least substantially inhibits fluid inside the conduit flowing through the inlet.

Not according to the claimed invention, step d) prevents fluid inside the conduit flowing through the inlet.

In one embodiment, the method comprises attaching conduit at or near the outlet to an external pump.

In one embodiment, step a) comprises placing the fluid removal apparatus partially in the enclosure by hand.

In one embodiment, the method further comprises withdrawing the fluid removal apparatus from the enclosure by hand.

In one embodiment, the enclosure is a drum.

Not according to the claimed invention, the fluid drawn from the enclosure comprises or is one or more of a petrochemical, an agrochemical and a pharmaceutical substance.

The term 'comprising', as used in this specification and claims, means 'consisting at least in part of'. When interpreting statements in this specification and claims which include the term 'comprising', other features besides the features prefaced by this term in each statement can also be present. Related terms such as 'comprise' and 'comprised' are to be interpreted in a similar manner.

It is intended that reference to a range of numbers disclosed herein (for example, 1 to 10) also incorporates reference to all rational numbers within that range (for example, 1, 1.1, 2, 3, 3.9, 4, 5, 6, 6.5, 7, 8, 9 and 10) and also any range of rational numbers within that range (for example, 2 to 8, 1.5 to 5.5 and 3.1 to 4.7) and, therefore, all sub-ranges of all ranges expressly disclosed herein are hereby expressly disclosed. These are only examples of what is specifically intended and all possible combinations of numerical values between the lowest value and the highest value enumerated are to be considered to be expressly stated in this application in a similar manner.

To those skilled in the art to which the invention relates, many changes in construction and widely differing embodiments and applications of the invention will suggest themselves without departing from the scope of the invention as defined in the appended claims. The disclosures and the descriptions herein are purely illustrative and are not intended to be in any sense limiting.

As used herein the term '(s)' following a noun means the plural and/or singular form of that noun.

As used herein the term 'and/or' means 'and' or 'or', or where the context allows both.

As used herein the terms 'upper', 'lower', 'top', 'bottom', 'side' and 'vertical' are relative terms used to explain embodiments.

The invention consists in the foregoing and also envisages constructions of which the following gives examples only.

In the description in this specification reference may be made to subject matter which is not within the scope of the appended claims. That subject matter should be readily identifiable by a person skilled in the art and may assist in putting into practice the invention as defined in the presently appended claims.

### BRIEF DESCRIPTION OF THE DRAWINGS

The present invention will now be described by way of non-limiting example only and with reference to the accompanying drawings in which:
Figure 1 a is a side view of a first embodiment fluid removal apparatus which is not claimed in this specification;
Figure 1b is a partial cross-sectional view from the other side compared to figure 1;
Figure 2 is a back view having a partial cross-section of the first embodiment fluid removal apparatus of figure 1a;
Figure 3 is a bottom view of the first embodiment fluid removal apparatus of figure 1a;
Figure 4 is an exploded view of the valve of the first embodiment fluid removal apparatus of figure 1a;
Figure 5 is a cross-sectional view of the valve of figure 4 in a closed position;
Figure 6 is a cross-sectional view of the valve of figure 4 in an open position;
Figure 7 is a cross-sectional view of the first embodiment fluid removal apparatus of figure 1a placed in an enclosure to draw fluid from the enclosure;
Figure 8 is a perspective view of a second embodiment fluid removal apparatus which is claimed in this specification;
Figure 9 is an exploded view of the valve of the second embodiment fluid removal apparatus of figure 8;
Figure 10 is a side view of the second embodiment fluid removal apparatus of figure 8;
Figure 11 is a cross-sectional view of the second embodiment fluid removal apparatus of figure 8 showing the valve in a closed configuration;
Figure 12 is a cross-sectional view of the second embodiment fluid removal apparatus of figure 8 showing the valve in a first open configuration;
Figure 13 is a cross-sectional view of the valve of the second embodiment fluid removal apparatus of figure 8 showing the valve in a second open configuration;
Figure 14 is a perspective view of a plug of the valve of the apparatus of figure 8;
Figure 15 is a perspective view of a base plate of the valve of the apparatus of figure 8;
Figure 16 a perspective view of an end plate of the valve of the apparatus of figure 8;
Figure 17 is a perspective view of a stem of the valve of the apparatus of figure 8;
Figure 18 a perspective view of an adaptor of the apparatus of figure 8;
Figure 19 a perspective view of a housing of the valve of the apparatus of figure 8;
Figure 20 a perspective view of a piston of the sealing assembly of the apparatus of figure 8;
Figure 21 a perspective view of a bellows seal and cap of a sealing assembly of the apparatus of figure 8; and
Figure 22a is a schematic side view of a first alternative lever/handle arrangement for moving the valve of the apparatus of figure 8 between the closed configuration (figure 11) and the second open configuration (figure 13);
Figure 22b is another schematic side view in the direction A in figure 22a;
Figure 23a is a schematic side view of a second alternative lever/handle arrangement;
Figure 23b is a schematic section view along the line B-B in figure 23a;
Figure 24a is a schematic side view of a third alternative lever/handle arrangement, a handle of the arrangement being shown in a first position corresponding to the closed configuration (figure 11);
Figure 24b is a schematic side view of the arrangement of figure 24a, the handle being shown in a second position corresponding to the second open configuration (figure 13);
Figure 25 is a schematic side view of a fourth alternative lever/handle arrangement;
Figure 26a is a schematic side view of a fifth alternative handle arrangement for moving the valve of the apparatus of figure 8 between the closed configuration (figure 11) and the second open configuration (figure 13);
Figure 26b is a schematic section view along the line C-C in figure 26a;
Figure 27a is a schematic side view of a sixth alternative lever/handle arrangement;
Figure 27b is a schematic view in the direction D in figure 27a;
Figure 28a is a schematic side view of a seventh alternative lever/handle arrangement; and
Figure 28b is a schematic view in the direction E in figure 28a.

### DETAILED DESCRIPTION OF EMBODIMENT EMBODIMENTS

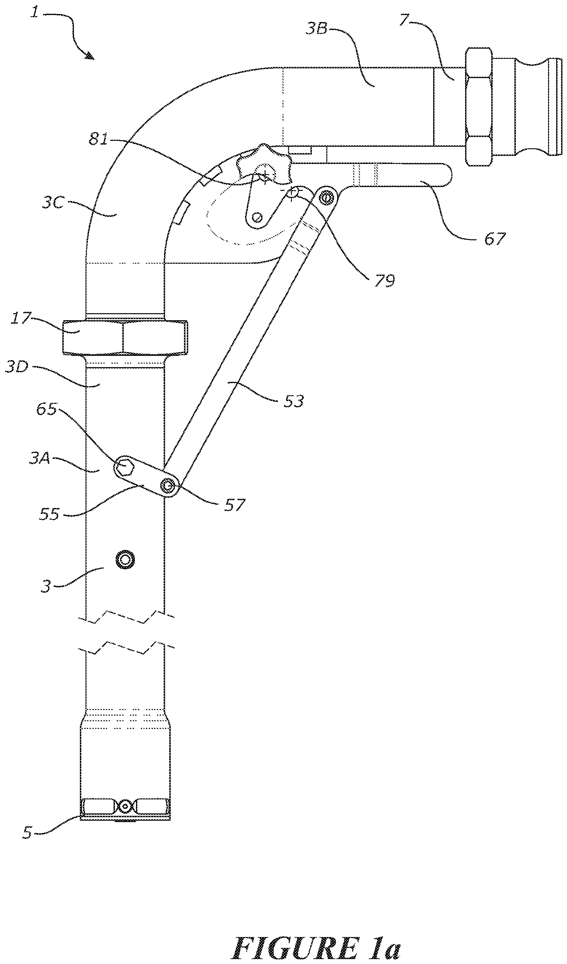

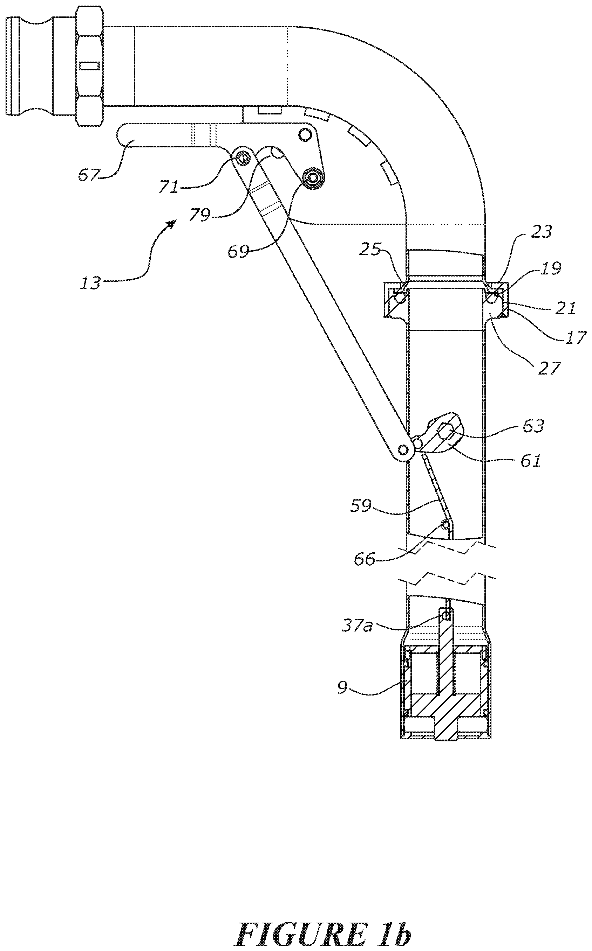

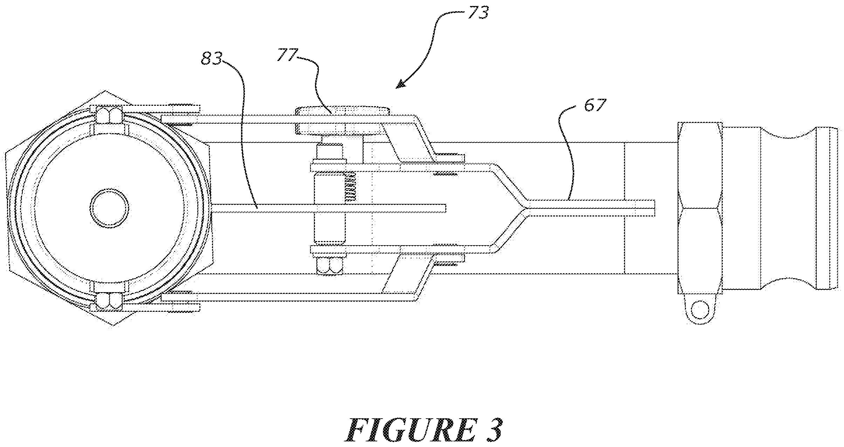

### Fluid removal apparatus (figures 1a-7)

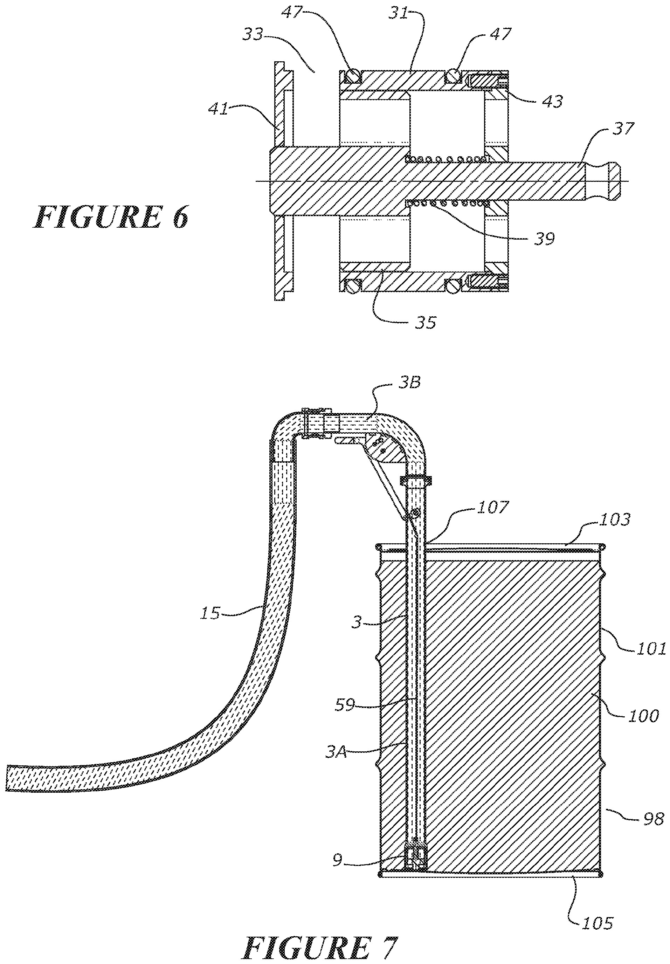

With reference to figures 1a to 7, a first embodiment fluid removal apparatus 1 according the present disclosure is shown. The embodiment of Figures 1a to 7 is not claimed and is present for illustration purposes only. The fluid removal apparatus 200 described below can be used to remove liquid from an enclosure or container such as that of figure 7.

The fluid removal apparatus 1 is adapted to remove a liquid from an enclosure or container. The embodiment fluid removal apparatus 1 is adapted to remove liquid from an enclosure or container in the form of a drum 98 shown in figure 7. The drum 98 has a cylindrical body 101, a top or lid 103, and a bottom 105. The top 103 of the drum 98 has an aperture 107 through which the drum 98 can be filled or emptied.

The fluid removal apparatus 1 has a conduit 3 with an inlet 5 and an outlet 7, a valve 9 at the inlet, a first valve operating mechanism 11 adjacent or near the valve, and a second valve operating mechanism 13 remotely spaced from the valve. The valve 9 has one or more open positions in which fluid is allowed to flow through the valve and a closed position in which fluid flow is substantially inhibited through the valve. The fluid removal apparatus 1 is attachable to an external pump (not shown). The apparatus 1 is attachable to the pump via one or more pump conduits 15.

### Conduit

The conduit 3 of the embodiment fluid removal apparatus 1 is shaped for use with a drum or other enclosure having an aperture in the top of the enclosure for removing fluid. In particular, the conduit 3 has a first portion 3A extending in a first direction and a second portion 3B extending in a second direction generally transverse to the first direction. In the embodiment, the second direction is substantially perpendicular to the first direction. The length of the conduit 3 is chosen or designed depending on the depth of the enclosure. The embodiment fluid removal apparatus 1 has a length to suit the depth of a 166.6 litre (44-gallon) drum. Alternatively, the fluid removal apparatus 1 may have a length to suit the depth of any other size enclosures. The fluid removal apparatus 1 may have a length to suit the depth of an enclosure in the form of, for example, a 208.2 litre (55 gallon) drum in the US or a 210 litre drum in Europe.

The conduit 3 comprises two distinct elements: an upper conduit element 3C and a lower conduit element 3D. The upper and lower conduit elements 3C, 3D are connectable by a selectively releasable mechanism to form the conduit 3. The selectively releasable mechanism includes a nut 17 and a sealing member 19.

The nut 17 has an internally threaded portion 21 and an inwardly extending annular portion 23. The sealing member 19 may be a gasket or O-ring. In the embodiment shown, the sealing member 19 is a ring joint type O-ring. The upper conduit element 3C has an outwardly flared end portion 25 at its lower end. The lower conduit element 3D has an outwardly extending collar 27 adapted to receive the O-ring 19. The collar 27 has an externally threaded section 29 adapted to engage the internally threaded section 21 of the nut 17.

When assembled, the nut 17 is threadingly engaged with the collar 27. The inwardly extending annular portion 23 of the collar 27 abuts the outwardly flared end portion 25 of the upper conduit element 3C. The O-ring 19 is held and suitably compressed between the outwardly flared end portion 25 of the upper conduit element 3C and the collar 27 of the lower conduit element 3D.

Each of the conduit elements 3C, 3D are tubes having substantially circular cross sections. In an embodiment, the tubes have a two inch (about 50 mm) outside diameter and are dairy grade 304 stainless steel, cold rolled tube. Alternatively the conduit may be formed from or comprise other structural material(s), including other metal(s), such as other metal composites, or polymer(s).

### Valve

The valve 9 comprises a body 31 with one or more laterally extending apertures 33 through which fluid is allowed to flow and a plug 35 for closing the apertures, when required. The valve 9 additionally comprises a valve stem 37, a coil compression spring 39, a lower valve cap 41 and an upper valve cap 43. The lower valve cap 41 is integrally formed with the valve body 31. The upper valve cap 43 is attached to the valve body 31 by fasteners 45, in particular grub screws. The valve 9 further comprises one or more sealing members in the form of a pair of O-rings 47 that are received in slots 49 of the valve body. The valve 9 is secured to the conduit by a pair of lock and registration screws.

### First valve operating mechanism

The first valve operating mechanism 11 comprises a protrusion 51 extending outwardly from the inlet 5 of the conduit 3, the protrusion 51 being moveable from an advanced position in which the valve 9 is in the closed position to one or more retracted positions in which the valve 9 is in a corresponding open position. The protrusion 51 is a piston that extends through an aperture 42 in the lower valve cap. The aperture 42 is concentrically located in the centre of the lower valve cap 41.

The valve 9 is adapted to operate by the first valve operating mechanism 11. It is operated automatically by a user forcing the protrusion 51 of the fluid removal apparatus 1 against a surface of the drum, which causes the protrusion 51 to retract and thereby open the valve. When it is removed from that surface, the valve will automatically close.

In an embodiment, the plug 35, valve stem 37, and protrusion 51 are integrally formed as a single component. The component may be formed from brass or other suitable sturctural materials such as other metals, engineering polymers or composites. The components may be machined, cast or moulded into the required shape. In an alternative embodiment, the plug 35, valve stem 37, and protrusion 51 may be separate and distinct elements that are assembled together.

### Second valve operating mechanism

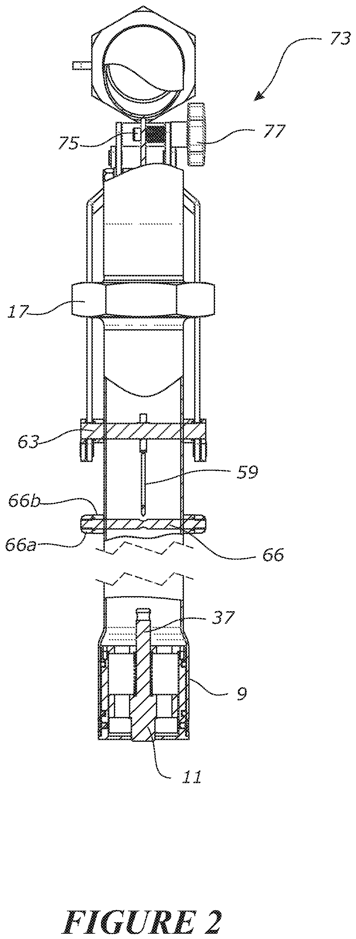

The second valve operating mechanism 13 is mechanically coupled to the valve 9 by a cable and linkage mechanism. The second valve operating mechanism 13 is operatively attached to the second portion 3B. In one embodiment of the mechanism 13, the linkage mechanism comprises a long arm 53 that is pivotally connected to a short arm 55 at a long arm/short arm pivot 57. The short arm 55 is connected to an internal cable 59 via a cam 61 and cam shaft 63. In particular, the short arm 55 is connected to the cam shaft 63 at a short arm/cam shaft pivot 65. The short arm 55 is fixed relative to the cam 61; that is, as the short arm pivots, the cam also pivots. The cam is shaped as shown in figure 2 to allow the components of the fluid removal apparatus 1 to move between the open and closed positions and also accommodate the positions of each of the components at the end of their travel.

The second valve operating mechanism 13 allows single handed actuation of the valve 9 from a remote position relative to the valve end of the apparatus. In other embodiments, intermittent holding positions may be achieved by the addition of a spring actuated ratchet or other mechanical latch to hold the valve at one or more partially open or fully open positions. The ratchet mechanism can be operated by applying and releasing pressure by a single hand to engage the opening, remaining open and closing of the valve.

The cable 59 attaches to the valve stem 37 at an aperture 37a of the stem 37. The cable is guided to the stem 37 via a cable guide. In the embodiment, the cable guide is a spindle 66. The spindle is attached to the nuts 66a and o-ring sealed bushes 66b.

In an embodiment, the fluid removal apparatus 1 has a lever 67 for operating the second valve operating mechanism 13. The lever 67 is pivotally connected to the conduit 3 at a lever/conduit pivot 69 and also pivotally connected to the long arm 53 at a lever/long arm pivot 71. The lever 67 is fixed to be grasped by a user's fingers, thumb and palm in a combined grip action like a tennis racket grip.

The lever 67 of the second valve operating mechanism 13 can be secured in an open position and/or secured in a locked position by a locking mechanism 73. The locking member comprises a sprung pin 75, which is operated by a handle 77. The pin engages with one or more apertures 79, 81 in a flange 83 extending from the conduit. When the pin engages the upper aperture 81, the second valve operating mechanism 13 will cause the valve 9 to be releasably locked in the open position. When the pin engages the lower aperture 79, the second valve operating mechanism 13 will cause the valve 9 to be releasably locked in the closed position. In another embodiment, the engagement of the position holding mechanism will allow engagement of the holding functionality and movement to another position as a function of repeated hand closing motions to facilitate different flow rates for different operating conditions.

To operate the second valve operating mechanism 13, in an embodiment, the lever 67 is manually operated to move towards the conduit 3 causing the lever 67 to pivot about the lever/conduit pivot 69. This causes the long arm 53 and short arm 55 to move, which causes the cam shaft 63 and cam 61 to pivot, in turn drawing on the cable 59 and opening the valve 9.

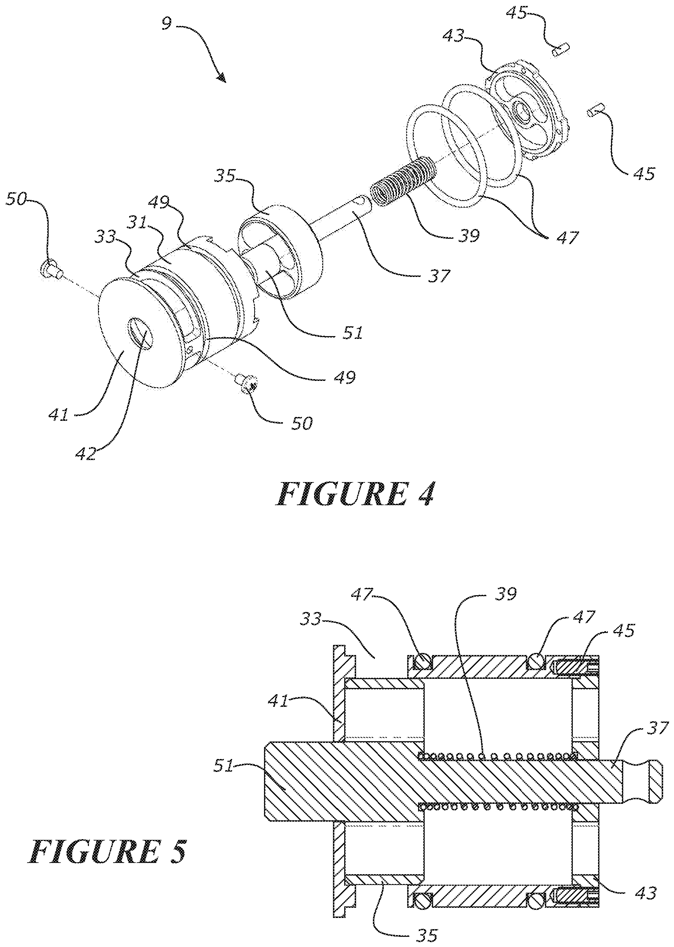

The valve 9 may be moved between the open and closed positions by the first valve operating mechanism 11, or by the second valve operating mechanism 13. The valve 9 moves between the open and closed position in an axial direction with respect to the conduit 3. With reference to figure 5, when the valve 9 is in the closed position, the plug 35 blocks the apertures and prevents or at least substantially inhibits fluid flow through the apertures. The plug 35 is biased towards the closed position by the compression spring 39.

With reference to figure 6, when the valve 9 is in the open position, or one of the open positions, the plug 35 does not block the apertures 33 and allows fluid flow through the apertures. The plug 35 is moved towards an open position by the piston 51 being forced against a surface, such as the bottom 105, of the drum 98. Alternatively, the plug 35 is moved towards an open position by a user operating the lever 67 which in turn operates the second valve operating mechanism 13 to pull the valve stem 37 in a direction away from the inlet 5. After the valve 9 is closed, any fluid remaining in the conduit 3 will be prevented from flowing out of the apertures 33.

A method for removing a fluid from an enclosure using the fluid removal apparatus 1 will now be described with reference to figure 7. The fluid removal apparatus 1 is placed in an enclosure in the form of a drum 98 such that the inlet 5, the valve 9, and the first valve operating mechanism 11 are each inside the interior 100 of the enclosure and operating portion of the second valve operating mechanism 13 is outside the interior of the enclosure.

The valve 9 is opened using the first valve operating mechanism 11 and/or the second valve operating mechanism 13. In an embodiment method, the valve 9 is opened by using the first valve operating mechanism 11. In particular, the protrusion 51 is pressed against a surface 105 of the interior of the enclosure causing the plug 35 to move away from the apertures 33 against the biasing force of the spring 39 and allowing fluid to flow into the conduit 3. The plug 35 moves in an axial direction relative to the conduit 3.

The pump is operated, drawing fluid from the enclosure through the conduit 3 and to the pump conduit 15. After the required amount of fluid has been withdrawn, the valve 9 is closed using the first valve operating mechanism 11 and/or the second valve operating mechanism 13. The first valve operating mechanism 11 closes the valve 9 by being withdrawn from the surface of the drum. The second valve operating mechanism 13 closes the valve 9 by a user operating the lever 67 to a closed position. The lever 67 causes the valve 9 to close via the linkages 53, 55 and cable 59. When the valve 9 is closed, fluid inside the conduit 3 is substantially inhibited from flowing through the apertures 33.

In an embodiment fluid removal apparatus 1, when the valve 9 is closed, fluid inside the conduit 3 is prevented from flowing through the apertures 33. The fluid removal apparatus 1 is then removed from the enclosure.

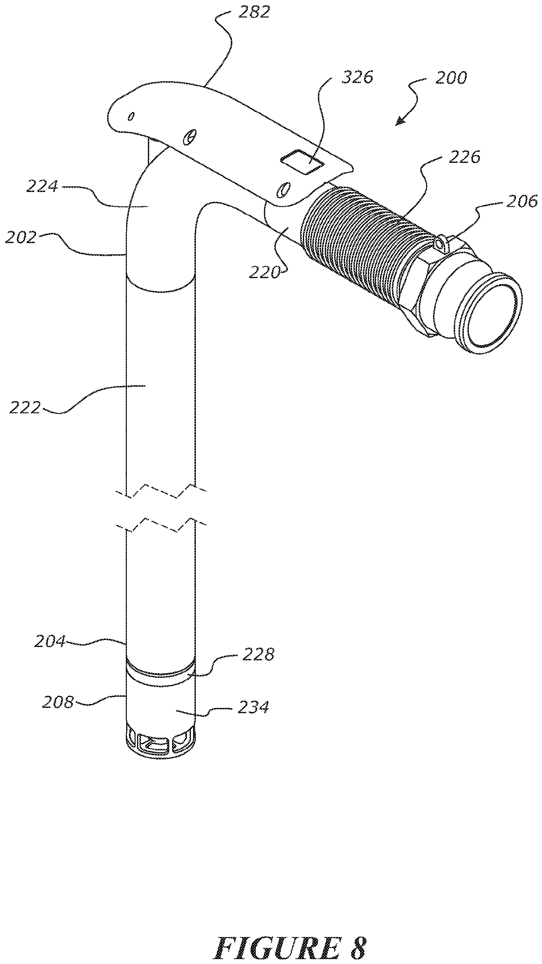

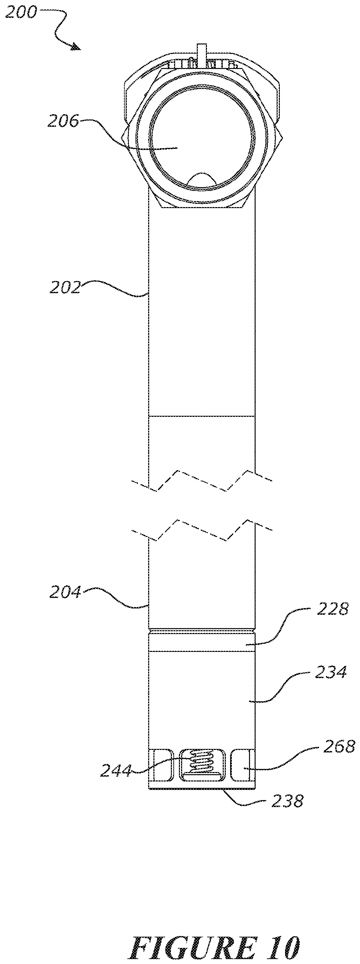

### Fluid removal apparatus (figures 8-21)

With reference to figures 8-21, a second embodiment fluid removal apparatus 200 according the present disclosure is shown. The fluid removal apparatus 200 is adapted to remove fluid, such as a hazardous liquid, from an enclosure or container. The liquid may comprise, or be, for example, petroleum or a petrochemical, such as a refined oil product. Alternatively, the fluid may be an agrochemical, a pharmaceutical substance, or other substance. The fluid may be in the form of a powder. The enclosure or other container may be, for example, a drum, such as the drum 98 shown in figure 7, or a tank, or a bucket or pail.

The fluid removal apparatus 200 has a conduit 202 with an inlet 204 and an outlet 206, a valve 208 at or near the inlet 204, a first valve operating mechanism 210 at or near the valve 208, and a second valve operating mechanism 212 remotely spaced from the valve 208.

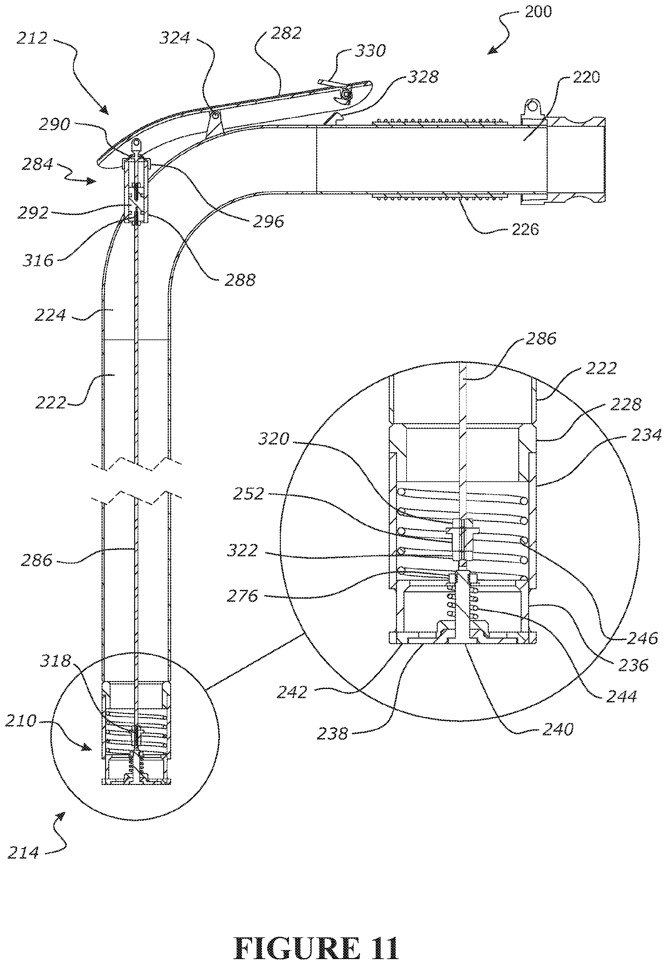

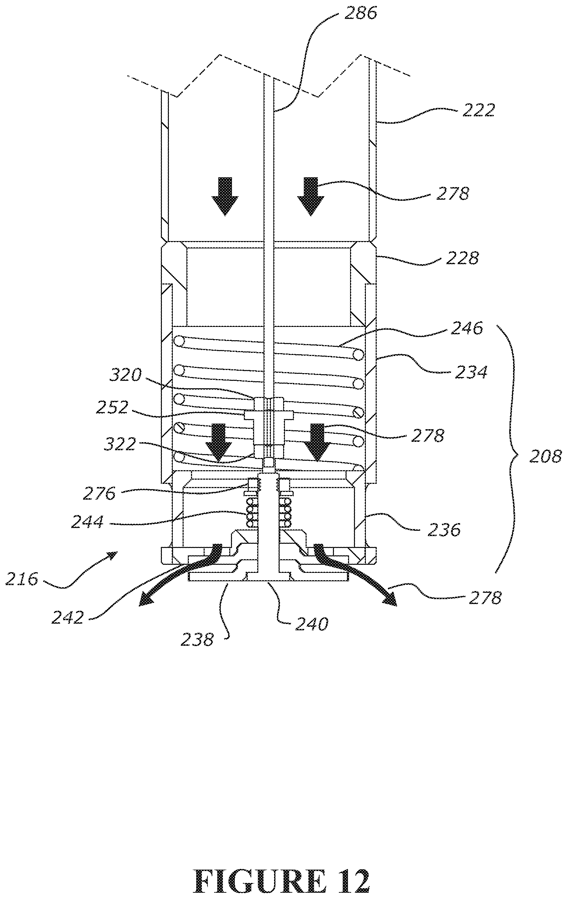

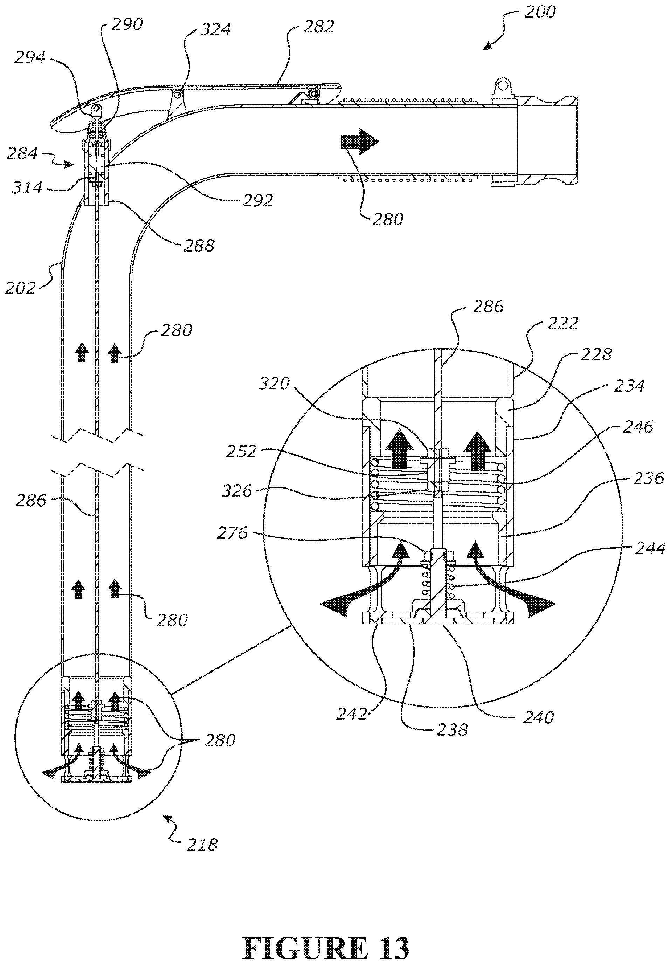

The valve 208 has a closed configuration 214 (figure 11) in which fluid flow is substantially inhibited through the valve 208, and one or more open configurations 216, 218 (figures 12 and 13) in which fluid is allowed to flow through the valve 208. The one or more open configurations comprise at least a first open configuration 216 (figure 12) and a second open configuration 218 (figure 13).

The first valve operating mechanism 210 is configured to open and close the valve 208 by moving the valve 208 between the first open configuration 216 and the closed configuration 214. The second valve operating mechanism 212 is configured to open and close the valve 208 by moving the valve 208 between the second open configuration 218 and the closed configuration 214.

The embodiment apparatus 200 is attachable to an external pump (not shown), for example, via one or more pump conduits, such as the pump conduit 15 shown in figure 7.

The embodiment apparatus 200 is moveable relative to the enclosure, and operable to draw fluid from the enclosure, by hand. The apparatus 200 is shaped and sized to be partially placed in, and withdrawn, from an enclosure by a user by hand to remove fluid from the enclosure.

### Conduit

The conduit 202 of the embodiment apparatus 200 is shaped for use with the drum 98 (shown in figure 7) or a similar enclosure. The conduit 202 has two or more distinct elements or portions 220, 222, 224. The conduit 202 of the embodiment apparatus 200 has three distinct elements 220, 222, 224. The conduit 202 has an upper, first element 220 that extends in a first direction, a lower, second element 222 that extends in a second direction, and a curved- or arcuate-shaped, elbow third element 224 intermediate and extending between the first and second elements 220, 222. The first direction is generally transverse to the second direction. In the embodiment apparatus 200, the first direction is substantially perpendicular to the second direction. Alternatively, the conduit 202 may be a single discreet (unitary) part. Alternatively, the conduit 202 may be formed from two, or four or more, discrete parts.

Like the conduit 3 described above, the length of the conduit 202 can be selected based on the dimensions (inlet size, depth) of the enclosure.

The first, second and third conduit elements 220, 222, 224 of the embodiment apparatus 200 are welded or similarly secured to one another in series (end-to-end) to form the conduit 202. Alternatively, the conduit elements 220, 222, 224 may be connectable to one another by a selectively releasable mechanism. A part (or parts in the case of the third conduit element 224) of each conduit element 220 (or 222 or 224) may have a threaded section for threadably, sealingly engaging a complimentary threaded section on part of the adjacent conduit element 224 (or 220 or 222). For example, the conduit 202 may comprise the selectively releasable mechanism for connecting the conduit elements 3C, 3D, for example, to form the conduit 3 of the first embodiment fluid removal apparatus 1 described above.

The conduit elements 220, 222, 224 are tubes. The conduit elements 220, 222, 224 of the embodiment apparatus 200 each have the same substantially circular cross-section. Alternatively, one or more of the conduit elements 220, 222, 224 may each have different or varying cross-sections. Further, the cross-section of one or more of conduit elements 220, 222, 224 may taper or expand along the length of the conduit element(s) 220, 222, 224.

The conduit elements 220, 222, 224 of the first embodiment apparatus 200 may have about the same outside diameter, for example, as the conduit elements 3C, 3D of the second embodiment apparatus 1.

The conduit elements 220, 222, 224 of the embodiment apparatus 200 may be formed from the same material(s), for example, as the conduit elements 3C, 3D of the embodiment apparatus 1.

The conduit 202 of the embodiment apparatus 200 comprises, or is associated with, at least one grip element or feature 226 that facilitates gripping or grasping the fluid removal apparatus 200 by hand. The at least one grip element 226 of the embodiment apparatus 200 is a grip that is located on, and at least partly extends around, the outer circumferential surface of the first conduit element 220. The grip element facilitates the apparatus 200 being picked up, and lowered into and withdrawn from an enclosure, by a user by hand, using either one or two hands. The grip element 226 may comprise, for example, a rubber and/or plastics material. Alternatively, the at least one grip element may be one or more other surface feature(s), such as one or more rough, ribbed or other shaped portion(s) of the outer surface(s) of one or more of the conduit elements 220, 222, 224.

In the embodiment apparatus 200, a hydrophobic coating that repels water and/ or an oleophobic coating that repels refined oils is applied to the inside surface(s) and/or the outside surface(s) of one more of the conduit elements 220, 222, 224. The coating can prevent spillage of fluid from the outer surface(s) of the conduit 202 as the conduit 202 is removed from an enclosure (in use), and/or inhibit corrosion of the conduit 202 to extend the life of the conduit 202. In the embodiment apparatus 200, a hydrophobic and oleophobic coating is applied to inside surfaces and outside surfaces of the embodiment apparatus 200, including surfaces of the conduit elements 220, 222, 224. One example of a suitable commercially available coating for the outer surface(s) of the embodiment apparatus 200 may be Ultra-Ever Dry^{®}, as sold by Ultra-Ever Dry (Australia).

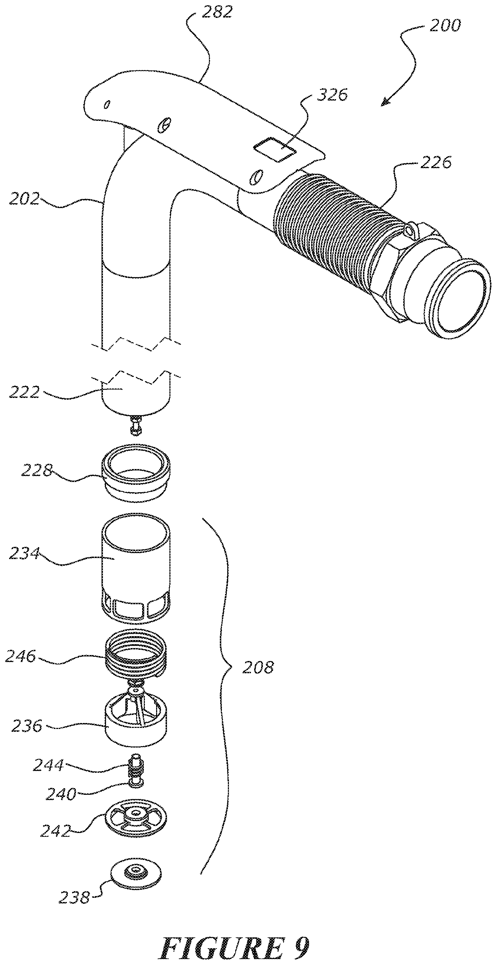

The embodiment apparatus 200 has an adaptor 228 that is configured to couple the conduit 202 to the valve 208. The adaptor 228 is an annular or ring-shaped adaptor. The adaptor 228 is sealingly connected to the conduit element 222 at or near the lower end of the conduit element 222 (as seen in figure 9). In the embodiment apparatus 200, the adaptor 228 is welded to the conduit element 222. Alternatively, the adaptor 228 may be releasably connected to the conduit element 222. For example, the adaptor 228 may be threadably engaged with the conduit element 222.

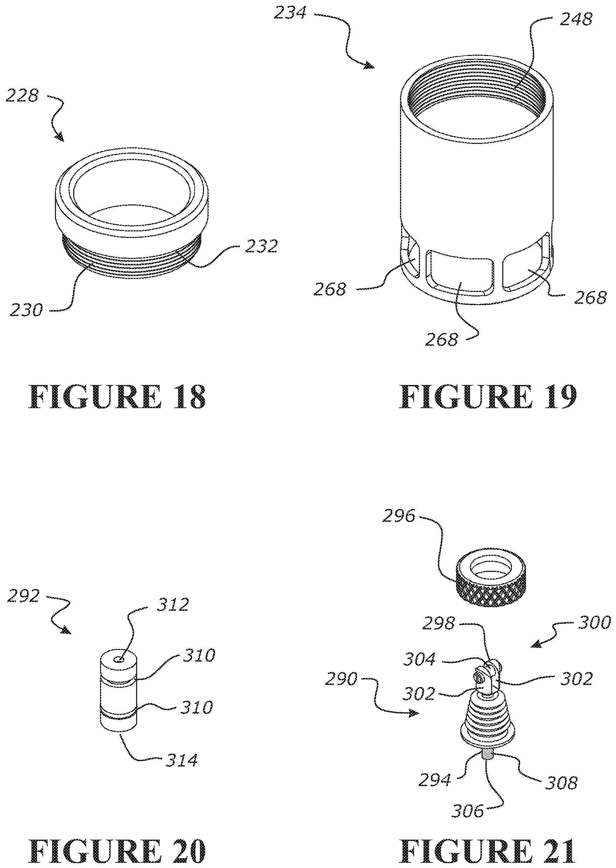

A lower part of the adaptor 228 (as seen in figure 18) has an externally threaded section 230 so that a housing 234 of the valve 208 can be screwed onto the adaptor 228 and, thereby, coupled to the conduit 202. In the embodiment apparatus 200, the lower part of the adaptor 228 (with the threaded section 230) has a smaller outside diameter than an upper part of the adaptor 228, creating an annular lip 232 between the lower part and the upper part.

### Valve

The valve 208 of the embodiment apparatus 200 comprises a body in the form of the hollow, generally cylindrical housing 234, a plug 236, a first pressure relief element in the form of end plate or cap 238, a stem 240, a second pressure relief element in the form of a base or cover plate 242, and one or more springs 244, 246.

The valve housing 234 is releasably connected to the adaptor 228. In the embodiment apparatus 200, the housing 234 is screwed onto the adaptor 228. An upper part of the housing 234 (as seen in figure 19) has an internally threaded section 248 that engages the externally threaded section 230 of the adaptor 228. The valve 208 may have one or more sealing members (not shown), such as a one or more gaskets or O-rings, provided where surface(s) of the adaptor 228 meet surface(s) of housing 234.

The valve plug 236 is located within the housing 234. The plug 236 is configured to move within and relative to the housing 234, along the axis of the housing 234, between a blocking position (figure 11) and an unblocking position (figure 13). The blocking position corresponds to the valve 208 being in the closed configuration 214 (discussed below). The unblocking position corresponds to the valve 208 being in the second open configuration 218.

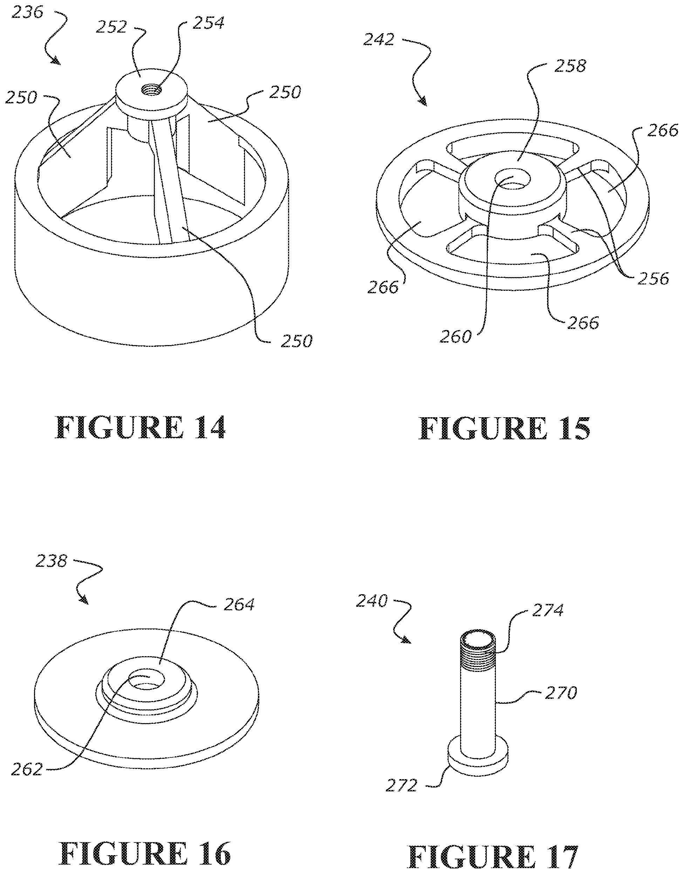

In the embodiment apparatus 200, the plug 236 has a generally cylindrical, hollow body through which fluid is able to flow. An upper part of the plug 236 (as seen in figure 14) has a plurality of circumferentially spaced-apart arms or spokes 250 that converge towards one-another and meet at a hub 252. The hub 252 is generally centrally located and has an aperture 254 in the form of an axially extending, internally threaded, aperture or hole for a linking element 286 (discussed below). The axially extending aperture 254 is a generally cylindrical hole. Fluid is able to flow between the arms 250 and through the plug 236. The plug 236 may be a moulded a part.

The base plate 242 is secured or fixed to a lower end of the valve housing 234 (as seen in figure 9). In the embodiment apparatus 200, the base plate 242 is a generally annular-shaped member that is welded to the lower end of the valve housing 234. Like the plug 236, the base plate 242 (figure 15) has a plurality of circumferentially spaced-apart arms or spokes 256 that converge towards one-another and meet at a hub 258. Fluid is able to flow between the arms 256 and through the plate 242. The hub 258 is a generally centrally located hub, and has an aperture 260 in the form of an axially extending hole for the valve stem 240 (discussed below). The axially extending aperture 260 is a generally cylindrical hole. In the embodiment apparatus 200, a lower side of the base plate 242 has a centrally located recess in the form of a circular-shaped recess.

In the embodiment apparatus 200, the end plate 238 is a generally annular- or disc-shaped member. The end plate 238 has an aperture 262 in the form of an axially extending hole for the valve stem 240 (discussed below). The axially extending aperture 262 is a generally cylindrical hole. An upper side of the end plate 238 (figure 16) has a centrally located, stepped or raised part in the form of a circular-shaped platform or boss 264. A lower side of the end plate 238 has a centrally located recess in the form of a circular-shaped recess for receiving the valve stem 240 (discussed below).

The end plate 238 is configured to move relative to the base plate 242 and the housing 234, generally along the axis of the housing 234, between a home position (figure 11) and a relief position (figure 12). The home position corresponds to the valve 208 being in the closed configuration 214 (discussed below). The relief position corresponds to the valve 208 being in the first open configuration 216.

In the embodiment apparatus 200, when the endplate 238 is in the home position, the boss 264 of the end plate 238 is received in the annular recess of the base plate 242. The size (diameter, height) of the boss 264 is selected to correspond to the size (diameter, height) of the recess of the base plate 242.

The valve 208 comprises one or more apertures 266, 268 through which fluid is allowed to flow. The valve 208 has at least one first aperture 266 through which fluid is allowed to flow when the valve 208 is in the first open configuration 216. The embodiment apparatus 200 has a plurality of first apertures 266. In the embodiment apparatus 200, the base plate 242 comprises the first apertures 266. The first apertures 266 extend through the base plate 242. In the embodiment apparatus 200, the first apertures 266 are radially extending apertures in the base plate 242 between the arms 256.

The valve 208 also has at least one second aperture 268 through which fluid is allowed to flow when the valve 208 is in the second open configuration 218. The embodiment apparatus 200 has a plurality of second apertures 268. In the embodiment apparatus 200, the valve housing 234 comprises the second apertures 268. The second apertures 268 extend through the housing 234. In the embodiment apparatus 200, the second apertures 268 are laterally extending apertures in the housing 234.

The one or more springs 244, 246 are arranged to bias the valve 208 towards the closed position. In the embodiment apparatus 200, the one or more springs 244, 246 comprise at least one first spring 244 and at least one second spring 246. The at least one first spring 244 is arranged to bias the end plate 238 towards the home position (figure 11) to inhibit fluid flow through the first apertures 266. The at least one first spring 244 is a coil compression spring. The at least one second spring 246 is arranged to bias the valve 208 towards the blocking position (figure 11) to block and substantially inhibit fluid flow through the second apertures 268. The at least one second spring 246 is a coil compression spring.

In the embodiment apparatus 200, the valve stem 240 has a neck portion 270 and a head portion 272. The neck portion 270 and the head portion are generally cylindrical, and generally coaxial, portions. The width (diameter) of the neck portion 270 is less than the width (diameter) of the head portion.

The neck portion 270 of the valve stem 240 extends through the apertures 260, 262 for the stem 240 in the base plate 242 and the end plate 238. The neck portion 270 also extends through the first spring 244 that is generally located between base plate 242 and the plug 236. The upper end of the neck portion 270 has an externally threaded section 274 that threadably engages a fastener in the form of a nut 276. The nut 276 retains the spring 244 between the nut 276 and the base plate 242 so that the spring 244 biases the nut 276 (and the upper end of the neck portion 270 to which the nut 276 is secured) in a direction away from the base plate 242.

The head portion 272 of the valve stem 240 is wider than the aperture 262 for the stem 240 in the end plate 238 to prevent the valve stem 240 passing entirely through aperture 262. In the embodiment apparatus 200, the recess in the lower surface of the end plate 238 at least partially receives the head portion 272 when the valve 208 is in the closed configuration 214. In the embodiment apparatus 200, the recess substantially receives the entire head portion 272 so that bottom surfaces of the end plate 238 and the head portion 272 form a generally flat surface when the valve 208 is in the closed configuration 214. The valve 208 may have a sealing member (not shown), such as an O-ring or other seal, that is located where the head portion 272 is received in the recess of the end plate 238 to help prevent fluid flow through the valve 208 when the valve 208 is in the closed position.

In an alternative embodiment, the stem 240, may be fixedly secured to the end plate 238. The stem 240 may be welded, for example, to the end plate 238.

### First valve operating mechanism

The first valve operating mechanism 210 is configured to move the valve 208 from the closed configuration 214 (figure 11) to the first open configuration 216 (figure 12) when the pressure of a pressurised fluid in the conduit 202 is greater than a predetermined pressure. In the first open configuration 216, the pressurised fluid is allowed to flow out of the conduit 202 through the valve 208 via the first apertures 266 as indicated by the arrows 278 (figure 12). The pressure of the fluid in the conduit 202 may exceed the predetermined pressure if, for example, a valve associated with an external pump (when connected to the apparatus 200) is inadvertently reversed causing the pump to blow fluid into (instead of suck fluid out of) the conduit 202.

The first valve operating mechanism 210 of the embodiment apparatus 200 comprises or is associated with the base plate 242, the end plate 238 and the first spring 244.

In the closed configuration 214 of the valve 208 (figure 11), the end plate 238 is in the home position. The first spring 244 biases the end plate 238 towards the base plate 242. The spring 244 that is retained between the nut 276 and the base plate 242 biases the end plate 238 towards the base plate 242.

In the closed configuration 214, the end plate 238 and the base plate 242 cooperate with one another to inhibit fluid flow through the valve 208 via the first apertures 266. The boss 264 formed on the upper side of the end plate 238 is received in the corresponding recess formed in the lower side of the base plate 242. The upper surface of the end plate 238 (as seen in figure 16) covers the first apertures 266 in the base plate 242 to inhibit fluid flow through the apertures 266. In the embodiment apparatus 200, the upper surface of end plate 238 substantially seals the first apertures 266 in the base plate 242 to prevent fluid flow through the apertures 266. The valve 208 may have a sealing member or members (not shown), such an O-ring or other seal, between the base plate 242 and the end plate 238 to help prevent fluid flow through the first apertures 266 when the valve 208 is in the closed position.

If the pressure of fluid in the conduit 202 is greater than or equal to a predetermined pressure, the valve 208 will automatically move to a first open configuration 216 in which the valve 208 is in the relief position to release some of the pressurised fluid in the conduit 202. The pressurised fluid will act on or force the end plate 238, via the first apertures 266 in the base plate 242, to move the end plate 238 against the bias of the spring 244 from the home position to the relief position (figure 12) that corresponds to the first open configuration 216. When the valve 208 is in the first open configuration 216, the pressurised fluid in the conduit 202 can flow out of the conduit 202 through the first apertures 266 to relieve the pressure, as indicated by the arrows 278.

As the end plate 238 moves to the relief position, the end plate 238 moves relative to and in a direction away from the base plate 242. This opens the first apertures 266 in the base plate 242 so that the pressurised fluid flow can out of the conduit 202 through the first apertures 266. The end plate 238 draws the stem 240 through the base plate 242, moving the nut 276 relatively towards the base plate 242, and compressing the first spring 244 between the nut 276 and the base plate 242.

When the pressure of the fluid in the conduit 202 has reduced or subsided to a pressure below the predetermined pressure, the spring 244 will automatically lengthen or extend. The stem 240, under the bias of the spring 244, will pull the end plate 238 towards the base plate 242 and back to the home position (figure 11). The valve 208 will be in the closed position. The base plate 242 will again seal off the first apertures 266 in the base plate 242 to prevent fluid flow through the valve 208 via the apertures 266.

The properties of the spring 244, including the spring constant or stiffness of the spring, can be selected according to the desired predetermined pressure at which the valve 208 will open to relieve pressure in the conduit 202.

### Second valve operating mechanism

The second valve operating mechanism 212 is configured to move the valve 208 between the closed position (figure 11) and the second open position (figure 13) to suck fluid out of an enclosure via the second apertures 268 as indicated by the arrows 280 (figure 13). In an embodiment, the second valve operating mechanism 212 of the embodiment apparatus 200 is operatively attached to the second conduit element 222.

Similar to the second valve operating mechanism 13, the second valve operating mechanism 212 allows single-handed actuation of the valve 208 from a remote position relative to the valve 208 end of the apparatus 200.

The second valve operating mechanism 212 sealingly couples a lever or handle 282 to the valve 208. The second valve operating mechanism 212 comprises, or is associated with, a seal assembly 284, the lever 282, and at least one linking element 286 that operably couples the lever 282 to the valve 208.

The seal assembly 284 couples the lever 282 to the valve 208. The seal assembly 284 of the embodiment apparatus 200 comprises a housing 288, a sealing element 290, a piston 292 that moves in the housing 288, and a connecting element 294 that extends between and operably couples the lever 282, for example, at or near a first end of the lever 282, to a first end of the piston 292.

The hollow housing 288 opens into the interior passageway of, and is sealingly coupled to, the conduit element 222. In the embodiment apparatus 200, the housing 288 is a generally cylindrical housing that partially extends into the interior passageway of the conduit element 222 and has a substantially cylindrical interior passageway in which the piston 292 moves. In the embodiment apparatus 200, the housing 288 is attached to the conduit element 222. The housing 288 may be welded to the conduit element 222. The housing 288 may be made from the same materials as one or more of the conduit elements 220, 222, 224, for example, stainless steel. Alternatively, the housing 288 may be formed as a unitary part with, for example, the intermediate conduit element 222.

In the embodiment apparatus 200, the housing 288 generally extends in the second direction (same direction as the conduit element 222). The housing 288 has an open top and an open bottom (as seen in figure 11). The sealing element 290 is coupled to the housing 288 at or near the top of the housing 288. The sealing element at least inhibits fluid flow out of or into the housing 288 via the top of the housing 288 where the connecting element 294 extends into the housing 288. In the embodiment apparatus 200, the sealing element 290 is a bellows seal that has a generally frustoconical shape. The seal assembly 284 has a cap 296 that engages an externally threaded section of the housing 288 to retain the bellows seal relative to the housing 288.

The sealing element 290 comprises, or is associated with, the connecting element 294 that extends between the lever 282 and the piston 292. In the embodiment apparatus 200, the connecting element 294 comprises a substantially rod-like member, for example, a stainless steel rod. An upper, first end 298 of the connecting element 294 is configured to releasably and pivotally engage the first end of the lever 282. In the embodiment apparatus 200, the first end 298 of the connecting element 294 comprises, or is, a clevis- or shackle-type fastening element 300. The fastening element 300 has spaced apart arms or prongs 302, and a removable pin or bolt 304 that extends between the arms. A lower, second end 306 of the connecting element 294 is configured to releasably engage an upper, first end of the piston 292. In the embodiment apparatus 200, the second end 306 of the connecting element 294 has an externally threaded section 308 for threadably engaging the piston 292.

In the preferred embodiment, the piston 292 is a generally cylindrical piston that is sized to sealingly move in an axial direction of the housing 288. The piston 292 has circumferentially extending grooves 310 for sealing members in the form of O-rings that inhibit fluid flowing in the housing 288 passageway between an internal wall of the housing 288 and the piston 292. An upper, first end of the piston 292 has an internally threaded recess or hole 312 for engaging the externally threaded section 308 of the connecting element 294 to releasably secure the piston 292 to the connecting element 294. A lower, second end of the piston 292 has an internally threaded recess or hole 314 for engaging the linking element 286.

The second valve operating mechanism 212 is mechanically coupled to the valve 208. In the embodiment apparatus 200, the second valve operating mechanism 212 of the embodiment apparatus 200 is coupled to the valve 208 via the linking element 286 that extends between the piston 292 and valve 208. In the embodiment apparatus 200, the linking element 286 is a rod-like member, for example, a stainless steel rod. Alternatively, the at least one linking element 286 may comprise, or be, a wire or cable, or comprises a combination of rod(s), wire(s) and cable(s).

An upper, first end of the elongated linking element 286 has an externally threaded section 316 for engaging the internally threaded recess 314 of the piston 292 to releasably secure the linking element 286 to the piston 292. A lower, second end of the linking element 286 has an externally threaded section 318 to releasably secure the linking element 286 to plug 236. The externally threaded section 318 engages the internally threaded aperture 254 through the hub 252 of the plug 236. In the embodiment apparatus 200, the linking element 286 secures the piston 292 relative to the hub 252 with, and engages, a first nut 320 adjacent the upper sider of the hub 252 and a second nut 322 adjacent the lower side of the hub 252. The nuts 320, 322 inhibit movement of the linking element 286 relative to the plug 236.

The second spring 246 is located in the valve housing 234, generally between the adaptor 228 and the plug 236. In the embodiment apparatus 200, the spring 246 is arranged so that movement of the spring 246 relatively towards the adaptor 228 is restricted by a lower rim of the adaptor 228. Movement of the spring 246 relatively towards the plug 236 is restricted by an upper annular rim of the plug 236.

The lever 282 is pivotally coupled to the conduit 202 at a pivot point 324 that is generally intermediate the first end of the lever 282 and the second end of the lever 282. In the embodiment apparatus 200, the lever 282 is releasably, pivotally connected to the intermediate conduit element 224 at the pivot point 324. The lever 282 is pivotally coupled to the valve 208 via the sealing assembly. In the embodiment apparatus 200, the first end of the lever 282 is releasably, pivotally connected to the first end of the connecting element 294. The lever 282 can be pivoted about the pivot point 324 to move the valve 208 from the closed configuration 214 (figure 11) to the second open configuration 218 (figure 13).

The lever 282, like the lever 67, is arranged to be grasped by a user's fingers, thumb and palm in a combined grip action, similar to how a tennis racket handle is gripped, with the first conduit element 220.

The lever 282 may also comprise, or be associated with, a grip element or feature 226, to facilitate a user operating the lever 282.

The embodiment apparatus 200 also includes a lever retaining mechanism 326 that comprises a catch or hook element 328, and a catch-engaging element 330 arranged to releasably engage the catch element 328. The catch and catch-engaging elements 328, 326 are configured to cooperate with each other to releasably retain the second end of the lever 282 relative to the conduit 202 to releasably retain or lock the apparatus 200 in the second open configuration 218. In the embodiment apparatus 200, the catch element 328 is attached, for example welded, to the first conduit element 220. Alternatively, the catch element 328 may be formed as an integral part with the conduit element 220. In the embodiment apparatus 200, the catch-engaging element 330 is a spring-loaded, hinged release element that is hingedly or pivotally attached to the lever 282 at or near the second end of the lever 282. The release element is pivotable relative to the lever 282 to engage the catch element. The catch-engaging element 330 can be released by pressing on the catch-engaging element 330, such as with a thumb of a hand operating the lever 282, against the bias of a spring to pivot the catch-engaging element 330 and disengage the catch-engaging element 330 from the hook element 328. The disengaged lever 282 is allowed to move relative to the conduit 202 to a positon corresponding to the closed configuration 214 of the valve 208.

In an alternative arrangement, the catch engaging element 330 may be provided on the conduit 202, and the corresponding catch element 328 may be provided on the lever 282.

In the embodiment apparatus 200, the second valve operating mechanism 212 is operable to draw fluid from an enclosure. The lever 282 is manually operable by hand to pivotally move the second end of the lever 282 towards the conduit 202. The lever 282 pivots about the pivot point 324. This causes the plug 236, which is coupled to the lever 282 via the connecting element 294, the piston 292 and the linking element 286, to move in and relative to the housing 234 in a direction towards the adaptor 228.

The plug 236 moves against the bias of the second spring 246 from the blocking position (figure 11) that corresponds to the closed configuration 214 to the unblocking position (figure 13) that corresponds to the second open configuration 218. The plug 236 moves relatively towards the adaptor 228, against the bias of the second spring 246, compressing the second spring 246.

In the blocking position, the plug 236 blocks the second apertures 268 to substantially inhibit fluid flow through the second apertures 268. In the embodiment apparatus 200, the plug 236 prevents fluid flow through the second apertures 268. In the unblocking position, the plug 236 does not fully block the apertures 268 so that fluid is allowed to flow through the second apertures 268. Fluid can be sucked into the conduit 202 through the at least partially unblocked second apertures 268, as indicated by the arrows 280.

The second valve operating mechanism 212 is operable to move the plug 236 to the blocking position by hand by releasing pressure on the second end of the lever 282. The first spring 244 lengthens or extends, biasing the plug 236 back towards the blocking position. In the embodiment apparatus 200, when the valve 208 is in the closed configuration 214, any fluid remaining in the conduit 202 is prevented from flowing out of the first and second apertures 266, 268.

Advantageously, in the embodiment apparatus 200, the lever 282 extends from and is pivotally mounted to an outer part, or parts, the conduit 202. The linking element 286 that operatively couples the lever 282 to the valve 208 generally extends within, and is protected by, the conduit 202

The embodiment apparatus 200 facilitates maintenance of the apparatus 200, including cleaning, repair, and replacement of parts of the valve 208 and the seal assembly 284. The valve 208 can be cleaned and sealing members replaced, for example, by disengaging (unscrewing) the valve housing 234 from the end of the conduit 202 / adaptor 228. The plug 236 can be disengaged from the linking element 286. The assembly 284 through which the linkage mechanism that couples the lever 282 to valve 208 enters the interior passageway of the conduit 202 can be similarly cleaned and sealing members replaced, for example, by disengaging (unscrewing) the cap 296 from the assembly housing 288.

An embodiment method of operating the embodiment apparatus 200 to remove fluid from an enclosure or other container, such as the drum 98 (figure 7) will be described.

In the embodiment method, the conduit 202 is attached at or near the outlet to an external pump via a pump conduit 15 (figure 7). The apparatus 200 is partially placed in the enclosure by a user using one or two hands so that second valve operating mechanism 212 is substantially outside the enclosure. In the embodiment apparatus 200, the linking element 286 will extend into the enclosure to operably connect the lever 282 to the plug 236.

In the embodiment apparatus 200, the valve 208 is moved from the closed configuration 214 to the second open configuration 218 to open the valve 208 using the second operating mechanism. In the embodiment method, the second end of the lever 282 is pressed or squeezed towards the conduit element 220 by hand, causing the plug 236 to move and unblock the second apertures 268. Fluid is drawn from the enclosure by the external pump through the conduit 202 via the second apertures 268 in the valve housing 234 (arrows 280 in figure 13).

If for some reason there is an excessive build-up of pressurised fluid in the conduit 202 that is equal to or greater than the predetermined pressure, the first valve-operating mechanism will automatically move the valve 208 to the first open configuration 216 to open the valve 208. The pressurised fluid will be released from the conduit 202, such as into the enclosure, through the first apertures 266 (arrows 278 in figure 12).

In the embodiment method, the first embodiment apparatus 200 can rest on, or be supported by, the enclosure while fluid is removed from the enclosure. For example, the bottom end of the embodiment apparatus 200 may rest on the interior bottom or floor of the enclosure. Alternatively, the conduit 202, such as the first conduit element 220 and/or the third conduit element 224 may be supported by a top or lid of the enclosure.

In the embodiment method, following removal of fluid from the enclosure, the valve 208 is able to be moved from the second open configuration 218 to the closed configuration 214 by hand to close the valve 208 using the second operating mechanism. In the embodiment method, the lever 282 is released, causing the plug 236 to block the second apertures 268.

Alternatively, the first operating mechanism may automatically operate to move the valve 208 from the first open configuration 216 to the closed configuration 214 to close the valve 208 when the pressure in the conduit 202 reduces below the predetermined pressure. In the embodiment method, the end plate 238 closes off the first apertures 268 in the base plate 242 to prevent fluid flow through the first apertures 266.

In the embodiment method, the apparatus 200 may be then removed (lifted) from the enclosure by a user by hand, using one or both hands.

In the embodiment method, the fluid may comprise or be, for example, one or more of a petrochemical, an agrochemical and a pharmaceutical substance.

### Alternative lever/handle arrangements

A person skilled in the art will understand that the second valve operating mechanism 212 may have other lever/handle arrangements for an operator to move the valve 208 from the closed configuration (figure 11) to the second open configuration (figure 13).

In one alternative, for example, the second embodiment apparatus 200 may comprise a similar linkage mechanism to the linkage mechanism of the first embodiment apparatus 1. The linkage mechanism may be modified so that parts of the linkage mechanism, such as the arms 53, 55 and the corresponding pivot, may be at least partially located inside the conduit element 200.

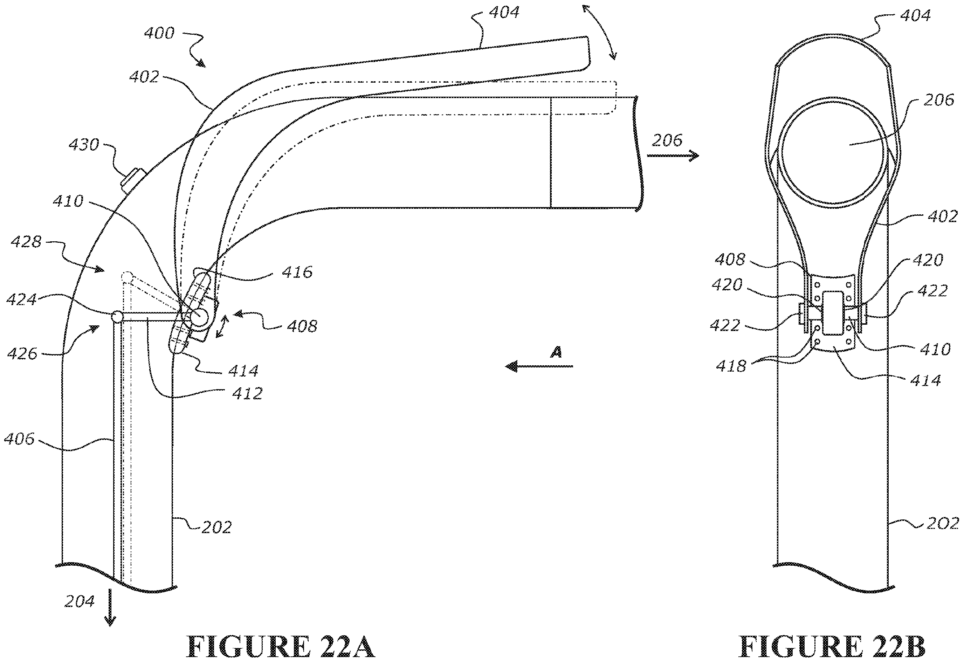

Other alternative lever/handle arrangements for single-handedly moving the valve 208 to the second open configuration (figure 13) from a remote position relative to the valve end of the apparatus 200 will be described with reference to schematic figures 22a-28b.

A first alternative lever/handle arrangement 400 is shown in figures 22a and 22b. The arrangement 400 comprises a handle or lever 402 that is operably connected to the valve 208 (not shown in figures 22a-28b) to open the valve. A section 404 of the handle 402 that is arranged to be gripped against the conduit 202 by a user in a combined action, similar to how a tennis racket is gripped by a user's fingers, thumb and palm, has a curved or arcuate cross-section. The section 404 generally conforms to the external surface of the conduit 202 that has a circular cross-section.

The handle 402 that is located outside the conduit 202 is pivotable relative to the conduit 202 to cause a linking element 406 that couples the handle 402 to the valve 208 to move in an upwardly direction (as seen in figure 22a) and to pull open the valve. The linking element 406 extends in the interior passageway of the conduit 202. Only part of the conduit 202 is shown in figures 22a-28b, and the interior passageway of the conduit 202 has been shown in some of the figures for clarity.

The handle 402 is operably connected to the linking element 406. The linking element 406 may be substantially the same as or similar to the linking element 286. The linking element 406 may be, for example, a rod or wire. The linking element 406 is configured to pull (move) the plug 236 relative to the housing 234 to unblock the apertures 268, as described above.

The arrangement further comprises a shaft support assembly 408, a rotatably mounted shaft 410, and an arm 412 that extends into the interior passageway of the conduit 202. The shaft support assembly 408 has an external housing 414 that is releasably secured against an outside surface of the conduit 202, and an internal backing plate 416 secured against an inside surface the conduit 202. The backing plate 416 may be welded to the conduit 202. Bolts 418 clamp the external housing 414 and the backing plate 416 together. One or more sealing members, such as gaskets or O-rings, can be used between the housing 414 and the conduit 202 and between the plate 416 and the conduit.

The shaft 410 is rotatably mounted to, and extends through, the external housing 414. Sealing members, such as O-rings 420, are used where the shaft 410 passes through the housing 414. The handle 402 is connected and secured relative to the shaft 410 with locking nuts 422. Pivoting the handle 402 relative to the conduit 202 causes the shaft 410 to rotate relative to the conduit 202.

The arm 412 extends between the shaft 410 and the linking element 406. A first end of the arm 412 is connected to and fixed relative to shaft 410, inside the housing 414. A second end of the arm 412 is pivotally connected inside the conduit 202 to a first end of the linking element 406 at pivot 424. The other end of the linking element 406 is connected to the plug 236. Rotating the shaft 410 moves the arm 412, which moves the pivot 424 and the linking element 406 up or down (as seen in figure 22a).

The handle 402 can be used to move the valve 208 from the closed configuration (figure 11) to the second open configuration (figure 13) to draw fluid from an enclosure. An operator squeezes the handle 402, preferably using a single hand, towards the conduit 202 to cause the shaft 410 to rotate. The rotating shaft 410 causes the second end of the arm 412, and the pivot 424 and the linking element 406, to move from a first position 426 (corresponding to the closed configuration of the valve 208 shown in figure 11) to a second position 428 (corresponding to the second open configuration of the valve 208 shown in figure 13). In figure 22a, the handle 402 is shown corresponding to the pivot arm 412 and the linking element 406 being in the second position 428, corresponding to the valve 208 being in the second open configuration.

The arrangement 400 may further comprises gears or a gear-like device for selectively changing the speed of the rotation of the shaft 410 relative and in response to rotation of the handle 402. The arrangement 400 may comprises gears (not shown), for example, that operably couple the handle 402 to the shaft 410 so that the rotation of the handle 402 causes a smaller, substantially the same or a larger rotation of the shaft 410, as required, to open the valve 208.

With reference to figure 22a, the fluid removal apparatus 200 may also comprise a vacuum relief valve 430. The valve 430 is secured to the conduit 202. The valve 430 is configured to allow fluid, such as air, from outside the conduit 202 to enter the interior of the conduit 202 via the valve 430 if the pressure in the conduit falls below, or substantially equals or is less than, a predetermined pressure. For example, if the valve 208 is unable to open for some reason when an external pump is operating to suck fluid through the conduit 202 from an enclosure and the pressure in the conduit 202 approaches (reduces close to) a vacuum. The valve 430 is shown generally located on a bend of the conduit 202, such as the conduit element 204. Alternatively, the valve 430 could be located at another location along the wall of the conduit 202, such as at or near the inlet 204 or the outlet 206.

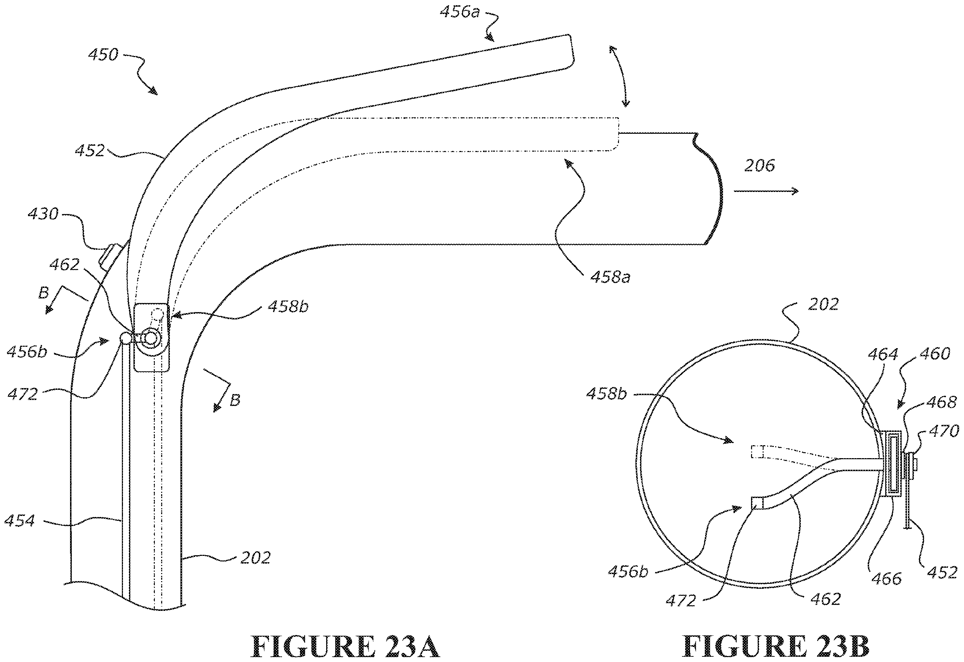

A second alternative lever/handle arrangement 450 is shown in figures 23a and 23b.

The arrangement 450 comprises a handle or lever 452 outside the conduit 202 that is operably connected to the valve 208 to open the valve. The handle 452 is similar to the handle 402. The handle 452 is pivotable relative to the conduit 202 to cause a linking element 454 that extends in the interior passageway of the conduit 202 and couples the handle 452 to the plug 236 of the valve 208 to move in an upwardly direction (as seen in figure 23a) to pull open the valve. The handle 452 is shown in figure 22a in both a first position 456a corresponding to the valve 208 being in the closed configuration (figure 11) and in a second position 458a (handle 452 shown in dashed line) corresponding to the valve being in the second open configuration (figure 13).

The handle 452 is operably connected to the linking element 454. The linking element 454 may be, and may operate, substantially the same as or similar to the linking element 286.

The arrangement 450 further comprises a shaft support assembly 460, and a rotatably mounted shaft 462 that extends though the shaft support assembly 460 and into the interior passageway of the conduit 202. The shaft support assembly comprises a face plate 464 and an external housing 466. The face plate 464 is welded to an external surface of the conduit 202. The external housing 466 is removeably secured to the face plate 464, such as with bolts or other fastener(s) (not shown).

The shaft 462 is rotatably mounted to and extends through the external housing 466. Sealing members, such as O-rings 468, are provided where the shaft 462 extends through the housing 466 and/or the plate 464. The handle 452 is connected and secured relative to the shaft 410 with a locking nut 470. Pivoting the handle 452 relative to the conduit 202 causes the shaft 462 to rotate relative to the conduit 202.

An end of the shaft 462 is pivotally connected inside the conduit to the linking element 454 at pivot 472. With reference to figure 23b, the shaft 462 is bent so that the shaft 462 extends in both a first direction into the conduit 202 and in a second lateral direction that is perpendicular to the first direction. Rotating the shaft 462 (using the handle 452) moves the pivot 472 and the linking element 454 up or down (as seen in figure 22a).

The handle 452 can be used to move the valve 208 from the closed configuration (figure 11) to the second open configuration (figure 13) to draw fluid from an enclosure. A user squeezes the handle 452 against the conduit 202 to cause the end of the shaft 462, the pivot 472 and the linking element 454 to move from a first position 456b (corresponding to the closed configuration of the valve shown in figure 11) to a second position 458b (corresponding to the second open configuration of the valve shown in figure 13).

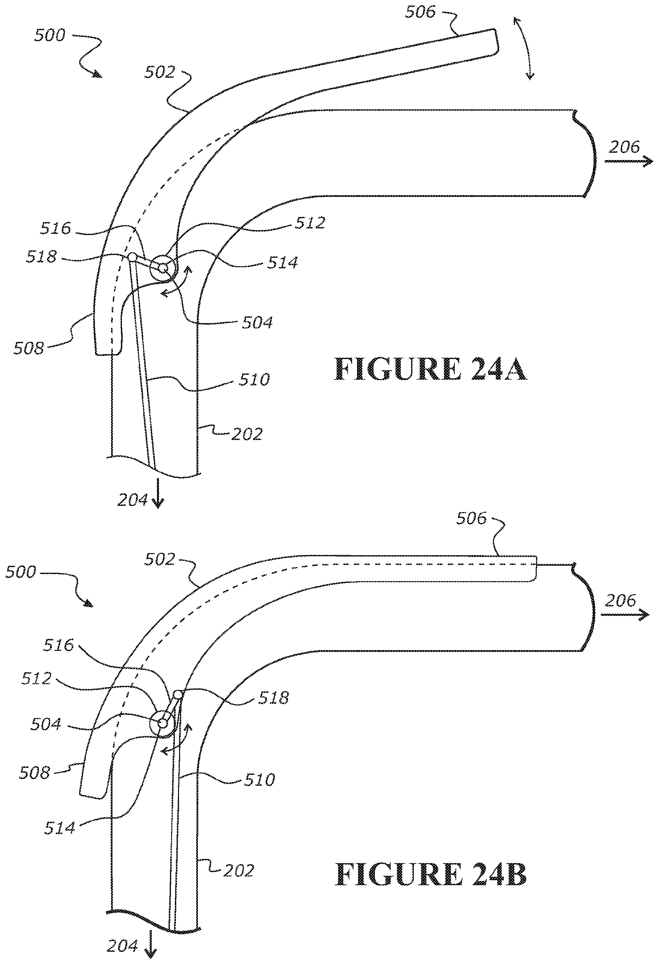

A third alternative lever/handle arrangement 500 is shown in figures 24a and 24b.

The arrangement 500 comprises a handle or lever 502 outside the conduit 202 that is operatively connected to the valve 208 to open and close the valve.

The handle 502 has a first section 506 and a second section 508, each arranged to be squeezed to or against the conduit 202 by a user to pivot the handle 502 and respectively open and close the valve 208. The shape of the handle 502 generally conforms to the outer shape of the conduit 202.

The handle 502 is pivotally mounted to the conduit 202 at a pivot 504 that is generally located intermediate the first and second sections 506, 508. The handle 502 is pivotable relative to the conduit 202 to cause a linking element 510 that extends in the interior passageway of the conduit 202 and operatively couples the handle 502 to the valve 208 to move in an upwardly direction (as seen in figures 24a and 24b) to pull open the valve. The handle 502 is shown in a first position in figure 24a corresponding to the valve 208 being in the closed configuration (figure 11), and in a second position in figure 24b corresponding to the valve 208 being in the second open configuration (figure 13) to draw fluid from an enclosure through the valve.

The handle 502 is operably connected to the linking element 510. The linking element 510 may be, and may operate, substantially the same as or similar to the linking element 286.

The arrangement 500 further comprises a shaft support assembly 512 mounted to the conduit, a shaft 514 rotatably mounted to the assembly 512 and extending through the assembly 512 into the interior passageway of the conduit 202, and an arm 516 inside the conduit.

The arm 516 extends between the shaft 514 and the linking element 510. A first end of the arm 516 is connected to and fixed relative to shaft 514. A second end of the arm 516 is pivotally connected inside the conduit to the linking element 510 at pivot 518. Pivoting the handle 502 relative to the conduit 202 causes the shaft 514 to rotate relative to the conduit 202. Rotating the shaft 514 moves the arm 516, which moves the pivot 518 and the linking element 510 up or down (as seen in figure 22a).

The handle 502 can be used to move the valve 208 from the closed configuration to the second open configuration to remove fluid from an enclosure, such as a drum. An operator squeezes the first section 506 of the handle 502 against the conduit 202 to cause the pivot 518 to move upwardly (as seen in figures 24a and 24b), pulling on the linking element 510 that pulls on the plug 236 to open the valve 208. The pivot 518 moves upwards, and over the pivot 504, and past a vertical or central axis (as seen in figure 24b) that passes through the pivot 504. When the pivot 518 is in the over-centre position (figure 24b), the pivot 518 is laterally offset from the vertical or central axis on the opposite side of the pivot 504 to where the pivot 518 is located when the valve 208 is in the closed configuration (figure 24a). The valve 208 is in the second open position, and the spring 246 associated with the valve 208 resiliently retains or locks the pivot 518 in the over-centre position to keep open the valve 208.

When the contents have been removed from the enclosure, the handle 502 can be used to move the valve from the second open configuration to the closed configuration. An operator squeezes the second section 508 of the handle 502 against the conduit to cause the pivot 518 to move back past the vertical or central axis, and then downwardly (as seen in figure 24a), allowing the spring 246 to bias the plug 236 back into the blocking position to cover the apertures 268 and close the valve 208.

The arrangement 500 advantageously facilitates a single-handed click-open, click-closed operation of the apparatus 200 when removing fluid from an enclosure.

The arrangement 500 may further comprise a mechanism, such as one or more latch(es), for releasably retaining the handle 502 in either the closed configuration (figure 24a) or the second open configuration (24b) and/or in one or more configurations intermediate the closed configuration and the second open configuration.

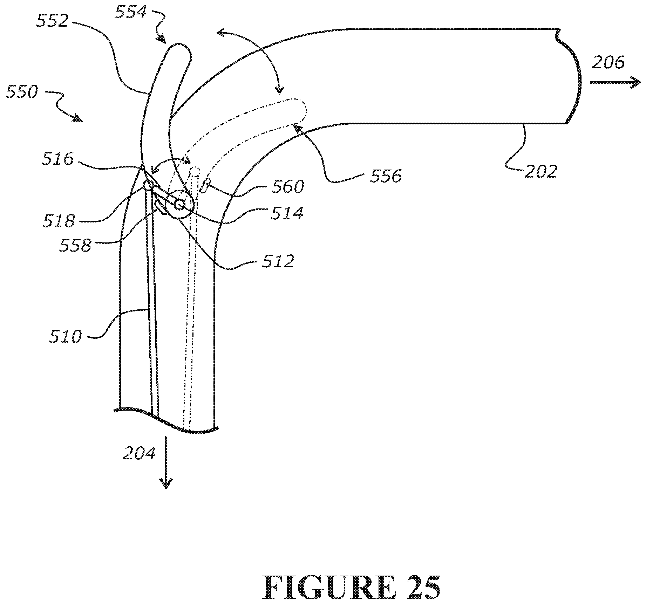

A fourth alternative lever/handle arrangement 550 is shown in figure 25.

The arrangement 550 comprises a handle or lever 552 that is operatively connected to the valve 208 to open the valve. Apart from the handle 552, the arrangement is substantially the same as, and operates similar to, the arrangement 500 shown in figures 24a and 24b.

The handle 552, which extends outside the conduit 202, has a generally arcuate shape. The handle 552 is pivotable from a first position 554 corresponding to the closed configuration (figure 11) of the valve 208 to a second position 556 (handle 552 shown in dashed lines) corresponding to the second configuration (figure 13).

Alternatively, the handle 552 may be other shapes.

The handle 552 can be moved relative to the conduit 202 with a free hand of an operator to open and close the valve 208, similar to the handle 502 shown in figures 24a and 24b.

In one embodiment, the arrangement 550 further comprises one or more stoppers 558, 560 arranged to limit the pivoting movement of the handle 552 relative to the conduit 202. The arrangement 550 comprises two stoppers 558, 560 attached to an outer surface of the conduit 202. One stopper 558 is arranged to stop the handle 552 pivotally moving in a first direction past the first position 554. The other stopper 560 is arranged to stop the handle 552 pivotally moving in a second direction past the second position 556, the second direction being opposite the first direction.

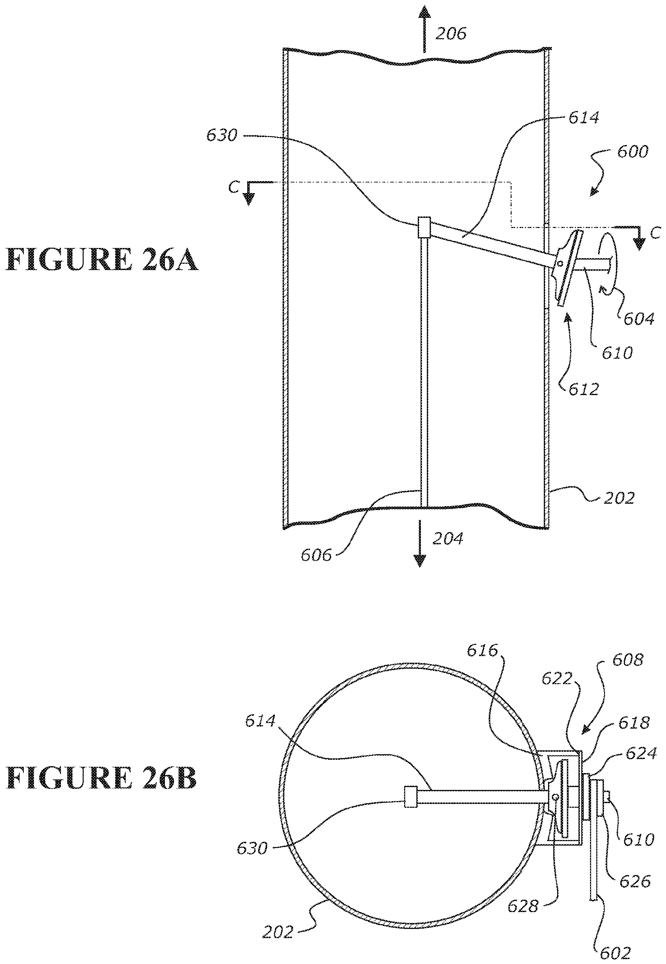

A fifth alternative lever/handle arrangement 600 is shown in figures 26a and 26b.

The arrangement 600 comprises a handle 602 that is operably connected to the valve 208 to open the valve.

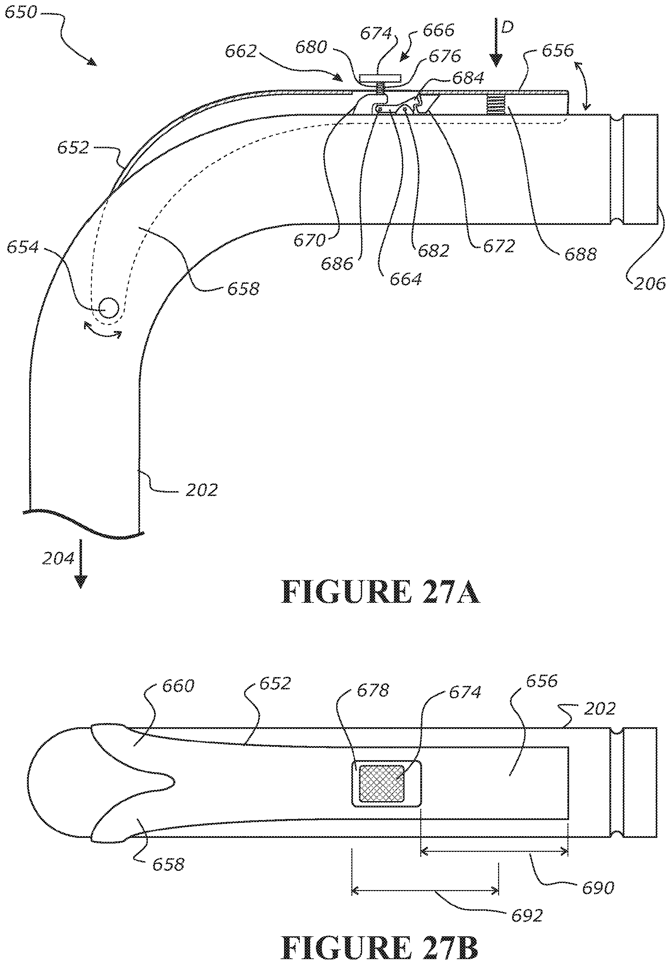

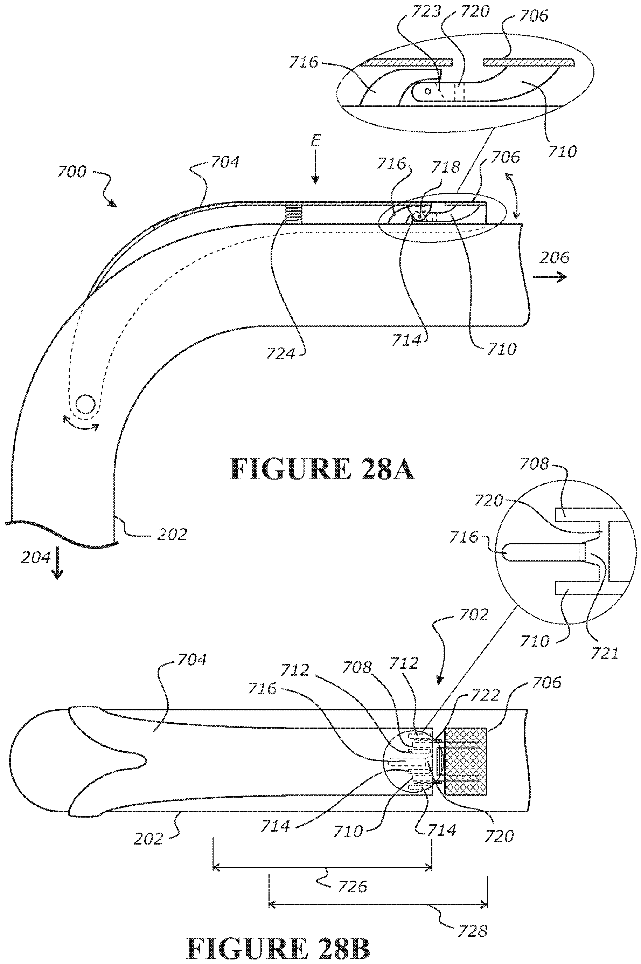

The handle 602 that is located outside the conduit 202 is rotatably coupled to the conduit 202. Part of the conduit 202 is shown schematically in cross-section in figure 26a. The handle 602 is rotatable relative to the conduit 202 to cause a linking element 606, which extends in the interior passageway of the conduit 202 and couples the handle 602 to valve 208 to move in an upwardly direction (as seen in figure 26a) to pull open the valve. The handle 602 may be, and may operate, substantially the same as, for example, the handle 402 (figures 22a and 22b), the handle 452 (figure 23a and 23b), the handle 502 (figures 24a and 24b), the handle 552 (figure 25), the handle 652 (figures 27a and 27b discussed below) or the handle 704 (figures 28a and 28b discussed below).

The handle 602 is operably connected to the linking element 606. The linking element 606 may be, and may operate, substantially the same as the linking element 268.

With reference to figure 26b, the arrangement 600 further comprises a support assembly 608, a shaft 610 that is rotatably mounted relative to the assembly 608 as indicated by the arrow 604, a swivel/swash plate mechanism 612, and an arm 614 that extends into the interior passageway of the conduit 202. The support assembly comprises a face plate housing 616 and an external plate 618. The housing is welded to an external surface of conduit 202. The external plate 618 is removeably secured to the housing 616 with bolts or similar fasteners (not shown). A sealing member, such as an O-ring 622, is located between the housing 616 and the plate 618. The shaft 610 extends through the housing 616. A sealing member, such as an O-ring 624, is provided where the shaft 610 passes through the external plate 618. One end of the shaft 610 is connected to the handle 602 with a locking nut 626 so that rotating the handle 602 causes the shaft 610 to rotate. The handle 602 and the support assembly 608 are not shown in figure 26a for clarity.

The swivelling/swash plate mechanism 612 is at least partly located within the housing 616. A second end of the shaft 610 is connected to the mechanism 612.

The arm 614 is connected to or associated with the mechanism 626 and extends into the conduit 202. The arm 614 is operably coupled to the shaft 610 via a universal joint (not shown). A locating pin 628 is used to locate the universal joint relative to the rest of the mechanism 626. A second end of the arm 614 is pivotally connected to the linking element 606 at pivot 630.

The mechanism 612 is configured to convert rotational movement of the shaft 610 into translational movement arm 614. The lever arm 614 extends into the interior passageway of the conduit 202 in a first direction and the shaft 610 extends in a second direction, the first direction generally being oblique to the second direction. Rotating the shaft 610 (using the handle 602) moves the lever arm 614, causing the pivot 630 and the linking element 606 to move up or down (as seen in figure 26a).

The handle 602 can be used to move the valve 208 from the closed configuration (figure 11) to the second open configuration (figure 13). A user rotates the handle 602 to cause the shaft 610 to rotate. The rotation of the shaft 610 causes the pivot 630 and the linking element 606 to move from a first position corresponding to the closed configuration to a second position corresponding to the second open configuration.

A sixth alternative lever/handle arrangement 650 is shown in figures 27a and 27b.

The arrangement 650 comprises a handle 652 outside the conduit 202 that is operably connected to the valve 208 to open the valve. The handle 652 may be operably connected to the valve 208 via a linking element (not shown) that extends in the interior passageway of the conduit 202. The arrangement 650 may operate in substantially the same or a substantially similar way as the arrangements 450, 500 and 550 (discussed above).

The handle 652 is pivotally mounted to the conduit 202 at pivot 654. The handle 652 is pivotal relative to the conduit 202, such as by a user squeezing the handle 652 against the conduit 202, to open the valve 208.

The handle 652 has a first section 656 configured to be squeezed by a user. The first section 656 is generally straight, and has a curved cross-section that generally conforms to the conduit 202 that has a circular cross-section. The handle 652 has a pair of bifurcated legs 658, 660 that extend from the first section 656 and along opposed sides of the conduit 202. An end of each of the legs 658, 660 is connected to the conduit 202 at the pivot 654 to facilitate the pivoting movement of the handle 652 relative to the conduit 202. Alternatively, the handle 652 may only have a single leg pivotally connected to the conduit.

The handle 652 has a latch mechanism 662 for releasably retaining the handle 652 in a position corresponding to the second open configuration of valve 208 (figure 13). The latch mechanism 662 comprises a lever 664, a button, pad or release member 666 for selectively releasing the lever 664, a support 670 to support the button member 666 relative to the lever 664, and a catch 672 that is secured to or is part of the handle 652. The support 670 is secured to the conduit 202.

The button member 666 has a button 674, and a stem 676 that extends from the button 674. The button 674 is configured to be pressed or pushed by a user to release the handle 652, as explained below. The button 674 is accessible by the user through an aperture 678 in the first section 656 of the handle 652. Preferably the button 674 protrudes through the aperture 678 about 3-15 mm, more preferably about 5 mm, above the first section 656 of the handle 652 when the handle 652 is releasably locked relative to the conduit 202 with the valve 208 open (as shown in figure 26a). The stem 676 extends through an aperture in the support 670. The stem 676 passes through a spring 680 that is arranged between the button 674 and the support 670 to bias the button 674 away the support 670.

The lever 664 is pivotally mounted to the conduit 202 at a pivot 682. A first end of the lever 664 comprises a hook 684 that is arranged to releasably engage the catch 672. A second end of the lever 664 is pivotally connected to the end of the stem at a pivot 686.

The arrangement 650 further comprises a second spring 688, spaced apart from the latch mechanism 662, and arranged between the first section 656 of the handle 652 and the conduit 202. The spring 688 is arranged intermediate the pivot 682 and an end of the handle 652. The spring 688 biases the first section 656 of the handle 652 away from the conduit 202.

Advantageously, the arrangement 650 provides for the single-handed operation of the apparatus 200 to click-open and click-closed the valve 208 to draw fluid out of an enclosure.

To move the valve 208 to the second open configuration, a user squeezes the first section 656 of the handle 652, generally indicated by the reference number 690, towards the conduit 202 to open the apertures 268 (not shown in figures 27a and 27b). The hook 684 releasably engages the catch 672 to releasably retain the handle 652 relative to the conduit 202. To release the handle 652, such as when the enclosure is empty, the user can press a second section of the handle 652, generally indicated by the reference number 692, and the button 674 at the same time towards the conduit 202. The lever 664 pivots to release the catch 672. The first section 656 of the handle 652 is allowed move away from the conduit 202 under the bias of the spring 688. The valve 208 can return to the closed configuration with the apertures 268 blocked by the plug 236.

A seventh alternative lever/handle arrangement 700 is shown in figures 28a and 28b. The arrangement 700 is substantially the same as the arrangement 650, except for the latch mechanism 702 of the arrangement 700 for releasably retaining the handle 704 relative to the conduit 202 with the valve 208 in the second open configuration.

The latch mechanism 702 is located at an end of the handle 704, generally intermediate the handle 704 and the outlet 206 (not shown in figures 28a and 28b).

The latch mechanism 702 comprises a latch handle 706, a lever in the form of bifurcated legs 708, 710 that extend from the latch handle 706, four spaced apart supports 712, 714 that extend from an end of the handle 704, and a hook 716 that is secured to and extends from the conduit 202. The supports 712, 714 are not shown for clarity in the schematic detail view in figure 28a.

The legs 708, 710 are respectively pivotally mounted to the supports 712, 714 at pivots 718 to counter lever the latch handle 706 from the end of the handle 704. A catch or latching member 720 extends between the legs 708, 710. The catch member 720 is arranged to releasably engage the hook 716. With reference to the detail view in figure 28b that shows the legs 708, 710, hook 716 and the catch member 720, the catch member 720 comprises a tongue 721 located intermediate the legs 708, 710. The tongue 721 is releasably engaged by the hook 716. A spring 722 shown in figure 28b biases the latch handle 706 and legs 708, 710 away from the conduit 202 to maintain the engagement between the catch member 720 and the hook 716.

The arrangement 700 further comprises a spring 724, spaced apart from the latch mechanism 702. The spring 724 is arranged to bias the handle 704 away from the conduit 202.

The arrangement 700, similar to the arrangement 650, facilitates a single-handed click-on, click-off operation of the handle 704 to move the valve 208 between the closed configuration (figure 11) and the second open configuration.

An operator or user can squeeze a first section of the handle 704, generally indicated by the reference number 726, towards the conduit 202 to open the valve 208. The legs 708, 710 and the catch member 720 move towards the conduit 202 with the handle 704. The tongue 721 has an angled or inclined side 723 that facilitates re-latching as the tongue 721 moves underneath the hook 716. The operator can press a second section of the handle 704 and the counter-levered latch handle 706, generally indicated by the reference number 728, towards the conduit 202 to release the catch member 720 from the hook 716 and close the valve 208. The second section 728 includes at least part of the first section 726. The spring 724 biases the first section 726 of the handle 704 away from the conduit 202. The valve 208 can return to the closed configuration with the apertures 268 blocked by the plug 236.

Preferred embodiments of the invention have been described by way of example only and modifications may be made thereto without departing from the scope of the invention.

The second valve operating mechanism of the first embodiment fluid removal apparatus 1 has been described as having a combination of the cables and linkages for operating the valve. Alternatively, the second valve operating mechanism may comprise a cable that links directly from the lever to the stem of the valve. In this embodiment, the cable may pass over one or more cable guides between the lever and the valve. In another embodiment, an internal ratchet mechanism provides the retaining feature and can be engaged and positioned by single repeated hand closures to one or more positions to allow different flow rates to be held before being closed.

In another alternative embodiment, the second valve operating mechanism of the embodiment fluid removal apparatus 1 (or 200) may comprise a single link between the lever and the valve. In a further alternative embodiment, the second valve operating mechanism may comprise two or more links between the lever and the valve.

The first valve operating mechanism has been described as being at the valve, in particular, substantially integrally formed with the valve. Alternatively, the first valve operating mechanism may be adjacent the valve.

In an alternative embodiment, the conduit elements may have any suitably shaped cross section and/or be formed from other suitable materials. For example, the conduit could have an oval or square cross section. The other components would have corresponding shapes. For example, the conduit elements may be formed from a suitable polymeric material or other metallic material. The choice of material will depend upon the intended use of the fluid removal apparatus. For example, the material will be chosen so that it does not react with the fluid being removed or does not contaminate the fluid being removed.

The valve of the embodiment fluid removal apparatus 1 (or 200) has been described as having lateral apertures. Alternatively, the apertures of the apparatus 1 may be provided in the lower valve cap and a lower surface of the plug may close the apertures when the valve is in the closed position.

Further, as discussed above with reference to the first embodiment apparatus 1, the second embodiment apparatus 200 may be configured to retain the lever in intermittent holding positions to hold the valve at one or more corresponding partially open or fully open positions. This can be achieved, as discussed above, by the addition of a spring actuated internally or externally (relative the conduit) ratchet or other mechanical latch, for example, to hold the valve at one or more partially open or fully open positions.

In another alternative, the plug may be configured to rotate relative to the housing to open and close the apertures of the corresponding apertures.

## Claims

1. A fluid removal apparatus (200) comprising:
a conduit (202) having an inlet (204) and an outlet (206);
a valve (208) at the inlet (204), the valve (208) having one or more open configurations (216, 218) in which fluid is allowed to flow through the valve (208) and a closed configuration (214) in which fluid flow is substantially inhibited through the valve (208),
the one or more open configurations comprising a first open configuration (216) and a second open configuration (218);
a first valve operating mechanism (210) at or near the valve (208) and configured to open and close the valve (208) by moving the valve (208) between the first open configuration and the closed configuration; and
a second valve operating mechanism (212) remotely spaced from the valve (208) and configured to open and close the valve (208) by moving the valve (208) between the second open configuration and the closed configuration.

2. A fluid removal apparatus (200) according to claim 1, wherein the valve (208) comprises a first pressure relief element (238) and at least one first aperture (266) through which fluid is allowed to flow;
the first valve operating mechanism (210) comprises or is associated with the first pressure relief element (238) and the first aperture (266); and
when the pressure of a pressurised fluid in the conduit (202) is substantially equal to or greater than a predetermined pressure, the first pressure relief element (238) is configured to move from a home position in which the valve (208) is in the closed configuration to a relief position in which the valve (208) is in the first open configuration (216) to allow the pressurised fluid to flow through the valve (208) via the first aperture (266).

3. A fluid removal apparatus (200) according to claim 1 or 2, wherein the second valve operating mechanism (212) is mechanically coupled to the valve (208).

4. A fluid removal apparatus (200) according to claim 3, wherein the second valve operating mechanism (212) is mechanically coupled to the valve (208) by a cable, a rod (286, 406, 454, 510, 606), or both a cable and a rod (286, 406, 454, 510, 606).

5. A fluid removal apparatus (200) according to any one of claims 1 to 4, further comprising a lever (282, 402, 452, 502, 552, 602, 652, 704) for operating the second valve operating mechanism (212).

6. A fluid removal apparatus (200) according to any one of claims 1 to 5, wherein the conduit (202) has a first portion (222) extending in a first direction and a second portion (220) extending in a second direction generally transverse to the first direction, and wherein the second valve operating mechanism (212) is operatively attached to the second portion (220).

7. A fluid removal apparatus (200) according to any one of claims 1 to 6, wherein the apparatus (200) is attachable to an external pump.

8. A fluid removal apparatus (200) according to claim 7, wherein the apparatus (200) is attachable to the external pump via a pump conduit (15).

9. A fluid removal apparatus (200) according to any one of claims 1 to 8, wherein the conduit (202) comprises three distinct elements (200, 222, 224) that are secured or securable together to form the conduit.

10. A fluid removal apparatus (200) according to any one of claims 1 to 9, wherein the fluid removal apparatus (200) is moveable and operable by a user by hand to remove a fluid from an enclosure.

11. A method for removing a fluid from an enclosure (98), the method comprising:
a) placing the fluid removal apparatus (200) according to any one of claims 1 to 10 partially in the enclosure (98) such that the inlet (204) is inside the interior of the enclosure and an operating portion of the second valve operating mechanism (212) is outside the interior of the enclosure;
b) opening the valve (208) via one of the first valve operating mechanism (210) and the second valve operating mechanism (212);
c) drawing fluid from the enclosure (98) through the conduit (202) or releasing fluid from the conduit (202) into the enclosure (98); and
d) closing the valve (208) via the one of the first valve operating mechanism (210) and the second valve operating mechanism (212).

12. A method according to claim 11, comprising attaching the conduit (202) at or near the outlet (206) to an external pump.

13. A method according to claim 11 or 12, wherein step a) comprises placing the fluid removal apparatus (200) partially in the enclosure (98) by hand.

14. A method according to any one of claims 11 to 13, further comprising withdrawing the fluid removal apparatus (200) from the enclosure (98) by hand.

15. A method according to any one of claims 11 to 14, wherein the enclosure (98) is a drum.

## Patentansprüche

1. Fluidentfernungsvorrichtung (200), umfassend:
eine Leitung (202) mit einem Einlass (204) und einem Auslass (206);
ein Ventil (208) am Einlass (204), wobei das Ventil (208) eine oder mehrere offene Konfigurationen (216, 218), in denen zugelassen wird, dass Fluid durch das Ventil (208) strömt, und eine geschlossene Konfiguration (214), in der eine Fluidströmung durch das Ventil (208) im Wesentlichen unterbunden wird, aufweist,
wobei die eine oder die mehreren offenen Konfigurationen eine erste offene Konfiguration (216) und eine zweite offene Konfiguration (218) umfassen;
einen ersten Ventilbetriebsmechanismus (210) an oder nahe dem Ventil (208) und dazu konfiguriert, das Ventil (208) durch Bewegen des Ventils (208) zwischen der ersten offenen Konfiguration und der geschlossenen Konfiguration zu öffnen und zu schließen; und
einen zweiten Ventilbetriebsmechanismus (212), der von dem Ventil (208) entfernt beabstandet ist und dazu konfiguriert ist, das Ventil (208) durch Bewegen des Ventils (208) zwischen der zweiten offenen Konfiguration und der geschlossenen Konfiguration zu öffnen und zu schließen.

2. Fluidentfernungsvorrichtung (200) nach Anspruch 1, wobei das Ventil (208) ein erstes Druckentlastungselement (238) und mindestens eine erste Öffnung (266), durch die eine Strömung von Fluid zugelassen ist, umfasst;
der erste Ventilbetriebsmechanismus (210) das erste Druckentlastungselement (238) und die erste Öffnung (266) umfasst oder damit assoziiert ist; und
wenn der Druck eines unter Druck stehenden Fluids in der Leitung (202) im Wesentlichen gleich oder größer als ein vorbestimmter Druck ist, das erste Druckentlastungselement (238) dazu konfiguriert ist, sich aus einer Ausgangsposition, in der das Ventil (208) in der geschlossenen Konfiguration ist, in eine Entlastungsposition, in der das Ventil (208) in der ersten offenen Konfiguration (216) ist, zu bewegen, um zuzulassen, dass das unter Druck stehende Fluid mittels der ersten Öffnung (266) durch das Ventil (208) strömt.

3. Fluidentfernungsvorrichtung (200) nach Anspruch 1 oder 2, wobei der zweite Ventilbetriebsmechanismus (212) mechanisch an das Ventil (208) gekoppelt ist.

4. Fluidentfernungsvorrichtung (200) nach Anspruch 3, wobei der zweite Ventilbetriebsmechanismus (212) durch ein Kabel, eine Stange (286, 406, 454, 510, 606) oder sowohl ein Kabel als auch eine Stange (286, 406, 454, 510, 606) mechanisch an das Ventil (208) gekoppelt ist.

5. Fluidentfernungsvorrichtung (200) nach einem der Ansprüche 1 bis 4, weiterhin umfassend einen Hebel (282, 402, 452, 502, 552, 602, 652, 704) zum Betreiben des zweiten Ventilbetriebsmechanismus (212).

6. Fluidentfernungsvorrichtung (200) nach einem der Ansprüche 1 bis 5, wobei die Leitung (202) einen ersten Abschnitt (222), der sich in einer ersten Richtung erstreckt, und einen zweiten Abschnitt (220), der sich in einer zweiten Richtung, die im Allgemeinen quer zu der ersten Richtung ist, erstreckt, aufweist, und wobei der zweite Ventilbetriebsmechanismus (212) betriebsfähig an dem zweiten Abschnitt (220) angebracht ist.

7. Fluidentfernungsvorrichtung (200) nach einem der Ansprüche 1 bis 6, wobei die Vorrichtung (200) an einer externen Pumpe anbringbar ist.

8. Fluidentfernungsvorrichtung (200) nach Anspruch 7, wobei die Vorrichtung (200) mittels einer Pumpenleitung (15) an der externen Pumpe anbringbar ist.

9. Fluidentfernungsvorrichtung (200) nach einem der Ansprüche 1 bis 8, wobei die Leitung (202) drei separate Elemente (200, 222, 224) umfasst, die aneinander befestigt oder befestigbar sind, um die Leitung zu bilden.

10. Fluidentfernungsvorrichtung (200) nach einem der Ansprüche 1 bis 9, wobei die Fluidentfernungsvorrichtung (200) von einem Benutzer von Hand bewegbar und betreibbar ist, um ein Fluid aus einem Gehäuse zu entfernen.

11. Verfahren zur Entfernung eines Fluids aus einem Gehäuse (98), wobei das Verfahren umfasst:
a) partielles Platzieren der Fluidentfernungsvorrichtung (200) nach einem der Ansprüche 1 bis 10 in dem Gehäuse (98), so dass der Einlass (204) innerhalb des Innenraums des Gehäuses ist und ein Betriebsabschnitt des zweiten Ventilbetriebsmechanismus (212) außerhalb des Innenraums des Gehäuses ist;
b) Öffnen des Ventils (208) mittels eines von dem ersten Ventilbetriebsmechanismus (210) und dem zweiten Ventilbetriebsmechanismus (212);
c) Ziehen von Fluid aus dem Gehäuse (98) durch die Leitung (202) oder Freigeben von Fluid aus der Leitung (202) in das Gehäuse (98); und
d) Schließen des Ventils (208) mittels des einen von dem ersten Ventilbetriebsmechanismus (210) und dem zweiten Ventilbetriebsmechanismus (212).

12. Verfahren nach Anspruch 11, umfassend ein Anbringen der Leitung (202) an oder nahe dem Auslass (206) an einer externen Pumpe.

13. Verfahren nach Anspruch 11 oder 12, wobei Schritt a) ein partielles Platzieren der Fluidentfernungsvorrichtung (200) in dem Gehäuse (98) von Hand umfasst.

14. Verfahren nach einem der Ansprüche 11 bis 13, weiterhin umfassend ein Herausziehen der Fluidentfernungsvorrichtung (200) aus dem Gehäuse (98) von Hand.

15. Verfahren nach einem der Ansprüche 11 bis 14, wobei das Gehäuse (98) ein Fass ist.

## Revendications

1. Appareil d'élimination de fluide (200), comportant :
un conduit (202) ayant une entrée (204) et une sortie (206) ;
une soupape (208) au niveau de l'entrée (204), la soupape (208) ayant une ou plusieurs configurations ouvertes (216, 218) dans lesquelles le fluide peut s'écouler à travers la soupape (208) et une configuration fermée (214) dans laquelle l'écoulement du fluide est sensiblement empêché à travers la soupape (208),
lesdites une ou plusieurs configurations ouvertes comportant une première configuration ouverte (216) et une deuxième configuration ouverte (218) ;
un premier mécanisme de commande de soupape (210) au niveau ou à proximité de la soupape (208) et configuré pour ouvrir et fermer la soupape (208) en déplaçant la soupape (208) entre la première configuration ouverte et la configuration fermée ; et
un deuxième mécanisme de commande de soupape (212) espacé à distance de la soupape (208) et configuré pour ouvrir et fermer la soupape (208) en déplaçant la soupape (208) entre la deuxième configuration ouverte et la configuration fermée.

2. Appareil d'élimination de fluide (200) selon la revendication 1, dans lequel la soupape (208) comporte un premier élément de décharge de pression (238) et au moins une première ouverture (266) à travers laquelle le fluide peut s'écouler ;
le premier mécanisme de commande de soupape (210) comporte ou se trouve en association avec le premier élément de décharge de pression (238) et la première ouverture (266) ; et
quand la pression d'un fluide sous pression dans le conduit (202) est sensiblement égale ou supérieure à une pression prédéterminée, le premier élément de décharge de pression (238) est configuré pour passer d'une position initiale dans laquelle la soupape (208) est dans la configuration fermée à une position de décharge dans laquelle la soupape (208) est dans la première configuration ouverte (216) pour permettre au fluide sous pression de s'écouler à travers la soupape (208) par le biais de la première ouverture (266).

3. Appareil d'élimination de fluide (200) selon la revendication 1 ou la revendication 2, dans lequel le deuxième mécanisme de commande de soupape (212) est couplé mécaniquement à la soupape (208).

4. Appareil d'élimination de fluide (200) selon la revendication 3, dans lequel le deuxième mécanisme de commande de soupape (212) est couplé mécaniquement à la soupape (208) par un câble, une tige (286, 406, 454, 510, 606), ou à la fois par un câble et une tige (286, 406, 454, 510, 606).

5. Appareil d'élimination de fluide (200) selon l'une quelconque des revendications 1 à 4, comportant par ailleurs un levier (282, 402, 452, 502, 552, 602, 652, 704) pour faire fonctionner le deuxième mécanisme de commande de soupape (212).

6. Appareil d'élimination de fluide (200) selon l'une quelconque des revendications 1 à 5, dans lequel le conduit (202) a une première partie (222) s'étendant dans une première direction et une deuxième partie (220) s'étendant dans une deuxième direction généralement transversale par rapport à la première direction, et dans lequel le deuxième mécanisme de commande de soupape (212) est fixé de manière fonctionnelle à la deuxième partie (220).

7. Appareil d'élimination de fluide (200) selon l'une quelconque des revendications 1 à 6, dans lequel l'appareil (200) est en mesure d'être fixé à une pompe externe.

8. Appareil d'élimination de fluide (200) selon la revendication 7, dans lequel l'appareil (200) est en mesure d'être fixé à la pompe externe par le biais d'un conduit de pompe (15).

9. Appareil d'élimination de fluide (200) selon l'une quelconque des revendications 1 à 8, dans lequel le conduit (202) comporte trois éléments distincts (200, 222, 224) qui sont assujettis ou en mesure d'être assujettis ensemble pour former le conduit.

10. Appareil d'élimination de fluide (200) selon l'une quelconque des revendications 1 à 9, dans lequel l'appareil d'élimination de fluide (200) est en mesure de se déplacer et en mesure d'être actionné manuellement par un utilisateur pour éliminer un fluide en provenance d'une enceinte.

11. Procédé d'élimination d'un fluide en provenance d'une enceinte (98), le procédé comportant les étapes consistant à :
a) placer l'appareil d'élimination de fluide (200) selon l'une quelconque des revendications 1 à 10 partiellement dans l'enceinte (98) de telle sorte que l'entrée (204) se trouve à l'intérieur de l'enceinte et qu'une partie de commande du deuxième mécanisme de commande de soupape (212) se trouve à l'extérieur de la partie intérieure de l'enceinte ;
b) ouvrir la soupape (208) par le biais de l'un parmi le premier mécanisme de commande de soupape (210) ou le deuxième mécanisme de commande de soupape (212) ;
c) aspirer le fluide en provenance de l'enceinte (98) à travers le conduit (202) ou libérer le fluide du conduit (202) jusque dans l'enceinte (98) ; et
d) fermer la soupape (208) par le biais de l'un parmi le premier mécanisme de commande de soupape (210) ou le deuxième mécanisme de commande de soupape (212).

12. Procédé selon la revendication 11, comportant l'étape consistant à fixer le conduit (202) au niveau ou à proximité de la sortie (206) sur une pompe externe.

13. Procédé selon la revendication 11 ou la revendication 12, dans lequel l'étape a) comporte l'étape consistant à placer manuellement l'appareil d'élimination de fluide (200) partiellement dans l'enceinte (98).

14. Procédé selon l'une quelconque des revendications 11 à 13, comportant par ailleurs l'étape consistant à retirer manuellement l'appareil d'élimination de fluide (200) de l'enceinte (98).

15. Procédé selon l'une quelconque des revendications 11 à 14, dans lequel l'enceinte (98) est un tonneau.
